# EUROPEAN PATENT APPLICATION

(11) **EP 4 711 485 A1**
(43) Date of publication of application: **18.03.2026**
(21) Application number: 24861433.1
(22) Date of filing: 03.01.2024
(51) Int. Cl.: C22C 38/02, C22C 38/04, C22C 38/24, C22C 33/04, C21C 5/52, C21C 7/064, C21C 7/068, C21D 8/06, B22D 11/11

(54) **HIGH-CLEANLINESS HIGH-CARBON STEEL AND LOW-CARBON-EMISSION PRODUCTION METHOD THEREFOR**

(30) Priority: 07.09.2023 CN 202311150744
(71) Applicant: INSTITUTE OF RESEARCH OF IRON AND STEEL, JIANGSU PROVINCE/SHA-STEEL, CO. LTD, Suzhou, Jiangsu 215625 (CN); Jiangsu Shagang Group Co., Ltd., Suzhou, Jiangsu 215625 (CN)
(72) Inventor: ZHAO, Jiaqi, Suzhou, Jiangsu 215625 (CN); MA, Han, Suzhou, Jiangsu 215625 (CN); CAI, Xiaofeng, Suzhou, Jiangsu 215625 (CN); MA, Jianchao, Suzhou, Jiangsu 215625 (CN); LI, Qiang, Suzhou, Jiangsu 215625 (CN)
(74) Representative: Cleanthous, Marinos
(86) International application number: PCT/CN2024/070307
(87) International publication number: WO 2025/050582

(57) **Abstract**

High-cleanliness high-carbon steel and a low-carbon-emission production method therefor are provided. The high-cleanliness high-carbon steel includes the following composition in percentage by mass: 0.50-1.0% of C, less than or equal to 0.006% of P, less than or equal to 0.0030% of N. The low-carbon-emission production method for the steel includes the steps of electric furnace smelting, RH vacuum processing, bloom continuous casting, cogging and grinding, high-speed wire-rod rolling, Stelmor air cooling, and finished wire rod obtaining. The control objectives of low C emission, low gas content, low impurity elements, and high cleanliness under the condition of a high steel scrap ratio are achieved.

## Description

### TECHNICAL FIELD

The present disclosure relates to a high-cleanliness high-carbon steel and a low-carbon-emission production therefor, belonging to the technical field of steelmaking.

### BACKGROUND

With the promotion of carbon neutrality targets, the steel industry is also actively pursuing manufacturing processes and technologies to reduce carbon emissions. During all-scrap-steel or low-hot-metal-ratio (less than or equal to 30%) smelting in an electric furnace process, blast furnace ironmaking can be cancelled, or the amount of molten iron can be reduced, thereby greatly reducing carbon emissions. However, when the electric furnace adopts all-scrap-steel or low-hot-metal-ratio smelting, due to the small amount of hot metal, KR (Kanbara Reaction) desulfurization treatment cannot be carried out, and the refining deep desulfurization pressure is high. In addition, due to the large usage amount of steel scrap, it is more difficult to control impurity elements, such as Al, Ti and Cu. Meanwhile, if a steel scrap ratio of the electric furnace is high, the power-on time is long, which is easy to cause a significant increase in a nitrogen content in the molten steel. Conventional process has limited denitrification capacity in RH (Ruhrstahl-Heraeus), while VD (Vacuum Degassing) denitrification process suffers from violent slag-metal reactions that accelerate refractory erosion and make inclusions unable to control. This results in limited adoption of all-scrap-steel or low-hot-metal-ratio modes in the electric furnace process for the high-quality high-carbon wire rod production, such as high-strength spring steel, cord steel, and cable steel. In addition, to produce high-quality high-carbon steel wire products with all steel scrap or low hot metal ratio in the electric furnace process, it is necessary to control not only the cleanliness of molten steel, but also the segregation and cracks of a continuous casting billet and structure and surface quality of a wire rod, thereby obtaining high-quality high-carbon steel wire products. To solve the problems described above, the present disclosure provides high-cleanliness high-carbon steel and a low-carbon-emission production therefor.

There are various types of high-carbon steel wire products, which are widely used. The control requirements of cleanliness, segregation, cracks and surface quality in the production process of middle and high-end high-carbon steel products, such as spring steel, cord steel and cable steel, are particularly strict. Spring, as an important basic component, is widely used in automobile, machinery, railway and other fields. As a safety bearing component, the spring needs to bear high-cycle alternating load in service, and its failure mode is mainly fatigue fracture. A large number of studies show that for high-strength and high-cycle fatigue springs, gas content, impurity elements, large-sized inclusions, brittle inclusions, segregation and surface quality are main causes of fatigue failure. Cord steel, as a skeleton supporting material in automobile tire rubber, has extremely high requirements for its quality stability. Large-size inclusions, segregation and abnormal structure are main reasons for drawing fracture and torsional stranding fracture, which seriously affects the quality stability of products and further affects operation safety of automobiles. Bridge cable steel is mainly used in large-scale bridge engineering, which is sensitive to phosphorus content, large-sized inclusions, segregation, network carbide, surface quality and the like. In the drawing process, brittle fracture or torsional fracture may be caused due to the foregoing defects, which affects the product quality and further affects the engineering quality and safety.

High-quality high-carbon steel wires are generally produced by blast furnace-KR hot metal pretreatment-converter-refining (LF (Ladle Furnace) or LF-VD/RH)-continuous casting process, with a long production process. The main reason is that the impurity elements, gas content, inclusions and the like in the electric furnace smelting process cannot be stably controlled. When smelting with all steel scrap or low hot metal ratio, the pressure of refining desulfurization is high because KR desulfurization cannot be carried out, and long-term deep desulfurization during refining makes gas absorption of the molten steel increased and the molten steel polluted with slag. In addition, to control hard inclusions such as alumina, magnesia-alumina spinel, titanium oxide and titanium nitride in the molten steel, the Al and Ti contents in the molten steel need to be strictly controlled in high-end wire rod products. In addition, to stabilize product performance, elements such as Cu, Mo and Sn also need to be strictly controlled, but the increase of a steel scrap ratio makes it more difficult to control impurity elements. Furthermore, with the increase of the steel scrap ratio, the electrifying time of electric furnace smelting is prolonged, which leads to the higher N content in molten steel than that of converter process. The conventional process has poor RH decarbonization ability, and denitrification ability of VD is stronger than that of RH. However, long-term use of VD for stirring and degassing is about to accelerate refractory erosion and makes slag-metal reaction violent, leading to uncontrollable inclusion types and poor cleanliness of molten steel. In addition, to ensure the quality of high-carbon steel wire products, besides the control of gas content and impurity elements, it is necessary to strictly control the segregation and cracks of continuous casting billets and structures and surface quality of wire rods, thereby obtaining high-cleanliness and high-quality wire products.

In patent No.2022111781023, a production process of medium and high-quality thin-gauge carbon tool steel is provided. A low-emission short-flow endless strip production process is adopted, including a quantum electric furnace smelting process, an out-of-furnace molten steel refining process by LF refining, out-of-furnace molten steel refining process by VOD or RH refining, and ESP (Endless Strip Production) continuous casting and rolling endless strip rolling process. The foregoing production processes are effectively combined to form a brand-new endless strip production process to produce the medium and high-quality thin-gauge carbon tool steel and produce high-carbon steel below specified specifications. Energy consumption and harmful emissions in the production process of the strip products can be effectively reduced. However, the used electric furnace mainly adopts large charge, tapping and hot heel for production, as the types of steel scrap are not classified, the content control of impurity elements cannot be ensured, making the content in impurity elements such as P, Cu and Ni in finished products on the high side as a whole. In addition, a process route of RH or VOD followed by LF refining is selected, the bottom-blowing stirring is activated in the refining process, and the slag-metal reaction is violent, which is unfavorable to the control of the inclusions and cleanliness of the molten steel.

In patent No. 202110338648X, high-cleanliness spring steel and a production method therefor are provided. The spring steel is produced by hot metal deep desulfurization, converter dephosphorization, LF refining, RH vacuum and continuous casting, and the hot metal is desulfurized until S in the hot metal is less than or equal to 0.0015%, the molten steel with P of less than or equal to 0.011% is obtained by converter blowing, and converter tapping and bottom blowing during refining process are accurately controlled. Combined with RH vacuum treatment process and tundish induction heating technology, inclusions in the molten steel are controlled throughout the whole process to obtain a spring steel wire rod with high cleanliness. However, a high-basicity slag system is adopted, in which Cao is 55-60% and SiO₂ is 20-25%. Due to high content in C and Si in the spring steel, under the condition of high basicity, Al₂O₃ in the slag or refractory is reduced by the Si element, resulting in the increase of alumina composition in molten steel inclusions, and the probability of the occurrence of high-melting-point aluminosilicate inclusions and brittle inclusions is greatly increased, which is unfavorable to the fatigue life control of the spring steel.

In patent No. 2022109583109, a spring steel wire and a production method therefor are provided. In this process, impurity elements such as P, S, Al and Ti and gas contents in molten steel are controlled through smelting process and some auxiliary materials, segregation of a cast billet is controlled through continuous casting under a high pressure, and the overall quality of the spring steel is controlled by shortening holding time and heating at a low temperature in combination with heating degree, as well as controlling furnace atmosphere and controlling surface decarburization by full grinding. In this process, resulfurization is controlled by KR and converter, and a high-basicity slag system is used for desulfurization in refining and vacuum processes, but the high-basicity slag system will cause a significant increase in Al₂O₃ and CaO composition in the molten steel, which is unfavorable for controlling the types of inclusions. In addition, because it is silicon-manganese deoxidized steel, acidic inclusions have a certain corrosive effect on refractories, and meanwhile, the reduction erosion of C on the refractories in high-carbon steel under vacuum is also serious. The method provided in this patent does not provide a control technology method for refractories such as vacuum and continuous casting, which is not conducive to the control of large-sized foreign inclusions. In addition, the continuous casting reduction is simply divided into three segments for reduction according to the solidification center, and the reduction in a single segment is too large, which may lead to internal cracks of the cast billet. However, the low holding time and low heating temperature are adopted in a reheating furnace for heating the cast billet, which is not conducive to the weakening and elimination of element diffusion and segregation. In addition, the use of a wire as a packing strap is easy to cause surface indentations and scratches on the surface of the spring wire rod.

In patent No. 2016102603055, a smelting process for controlling inclusions in spring steel is provided, including: (1) electric furnace primary smelting; (2) argon blowing; (3) LF furnace refining; (4) VD furnace refining; and (5) continuous casting. Si/Mn aluminum-free deoxidation process is used for pre-deoxidation in the electric furnace primary smelting process, and active lime, a composite agent and a refining slag are used at the same time. Although brittle inclusions in steel can be well controlled, the basicity of slag in the late refining period is controlled at 0.7-1.4, and an acid slag seriously corrodes the refractories of a ladle and a continuous casting tundish, which is easy to cause foreign inclusions to exceed the standard and affect the fatigue life of the spring steel.

In patent No. 2018115248243, a spring steel hot-rolled wire rod for an overloaded die spring and a production method therefor. The production method includes working process of converter smelting, LF furnace refining, bloom continuous casting, cogging, hot-rolled billet shot blasting flaw detection and grinding, billet heating, controlled rolling and controlled cooling. The spring steel hot-rolled wire rod for an overloaded die spring has good surface decarburization, internal segregation and cleanliness control, and the processed spring steel wire with different cross sections can be used for winding an overload die spring. However, a low-superheat casting at 10-20°C is not conducive to not only floating removal of inclusions, and but also the reduction and the control of microcracks in the cast billet after reduction. In addition, the acidic pre-melted refining slag is adopted, but the refractories and auxiliary materials are not controlled, which may lead to aggravation of refractories erosion and the increase of foreign impurity elements and inclusions, and is unfavorable to the overall quality control of high-strength spring steel.

In patent No. 2020111278482, a wire rod for 2300-MPa prestressed steel strand and a production method therefor are provided. The production of the wire rod goes through the technological processes of pre-desulfurization of molten iron, converter smelting, out-of-furnace refining, bloom continuous casting, cogging, high-speed wire-rod rolling, air cooling and a salt bath treatment in turn. A molten steel superheat in a continuous casting tundish is 12-25°C, measures such as electromagnetic stirring and dynamic soft reduction are adopted to reduce solidification segregation, and the rolling process of two-fire billet is adopted, which is intensively cooled before phase transformation to inhibit the formation of network cementite. After the salt bath treatment, the wire rod structure has sorbite of more than or equal to 95% and network carbon of less than or equal to 1 grade. However, the adoption of low-superheat casting is not conducive to the control of cracks caused by floating and high reduction of inclusions. The cast billet after rolling also needs to undergo the salt bath treatment, leading to long overall technical flow and high production cost.

In patent No. 2021110884598, a production method for deep-drawn high-carbon steel wire rod is provided. The steel includes chemical composition as follows: 0.69-1.02% of C, 0.15-0.35% of Si, 0.40-0.90% of Mn, less than or equal to 0.35% of Cr, less than or equal to 0.025% of P, less than or equal to 0.025% of S and a balance of iron and inevitable impurities. Special mold powder and large-chamfered mold are used for continuous casting, a high temperature is used for high-speed wire rod heating, holding time is controlled, and an oxidizing atmosphere is used to increase a burning loss of billet surface in a reheating furnace, and the grade of the network cementite on the surface of wire rod is less than or equal to 0.5. However, the applicable high-carbon steel wire rod has high overall content in impurity elements such as P and S, and poor cleanliness. Employing a highly oxidizing atmosphere in a reheating furnace induces severe surface decarburization of the billet, leading to the increase of grinding allowances and adverse impact on the production cost and wire rod quality control. This approach is unsuitable for manufacturing a high-quality high-carbon steel wire rod product.

The high-carbon steel wire product has strict requirements on impurity elements, inclusions, composition and microstructure uniformity, especially high-end wire products, such as automobile suspension springs, high-grade cord steel and diamond wires, high-strength bridge cable steel and so on. Therefore, to obtain high-quality high-carbon steel products under the condition of a high-scrap-ratio smelting mode in an electric furnace process, it is necessary to comprehensively study and design the electric furnace process manufacturing technology from the aspects of controlling impurity element content, inclusion type and size, composition and organization uniformity and wire rod surface quality. On the surface, brittle inclusions and large-sized silicate inclusions are one of the key factors that cause the decline of quality and performance of high-carbon steel products. Therefore, it is necessary to control the contents of Al, Ti and N in the molten steel to prevent the formation of hard inclusions such as alumina, magnesia-alumina spinel and titanium nitride. Inclusions formed from deoxidation products and slag-metal reactions require control through both plasticity modification and size refinement. In addition, it is necessary to control the contents of P and S to reduce the quality problems of products such as cold brittleness and hot brittleness. Meanwhile, it is also necessary to accurately control the composition, microstructure uniformity and surface quality of the wire rod, mainly through continuous casting and rolling processes. In the continuous casting process, the cast billet with high composition uniformity is obtained by controlling the molten steel superheat, cooling water intensity and reduction process, and the problems such as segregation, mesh carbon and surface quality are alleviated by combining cogging and grinding, controlled rolling and controlled cooling technologies. Therefore, a high-cleanliness, high-quality and low-carbon-emission high carbon steel wire rod can be obtained.

### SUMMARY

To solve the problems described above, the present disclosure provides high-cleanliness high-carbon steel and a low-carbon-emission production therefor, with specific technical solutions as follows.

In addition to alloy elements such as Si, Mn, Cr and V as well as Fe element, high-cleanliness high-carbon steel further includes the following chemical composition in percentage by mass: 0.5-1.0% of C, less than or equal to 0.006% of P, less than or equal to 0.0035% of S, less than or equal to 0.0010% of T.O, less than or equal to 0.0030% of N, less than or equal to 0.0002% of H, less than or equal to 0.0015% of Alt, less than or equal to 0.0008% of Ti, less than or equal to 0.02% of Ni, less than or equal to 0.015% of Cu, less than or equal to 0.005% of Mo, less than or equal to 0.010% of Sn, and less than or equal to 0.008% of As.

Further, inclusions in the high-cleanliness high-carbon steel wire rod are mainly SiO₂-MnO low-melting-point inclusions, a number density of inclusions above 1 µm is less than or equal to 5 per mm², a number density of inclusions above 5 µm is less than or equal to 0.12 per mm², a maximum size of a transverse inclusion is less than or equal to 15 µm, grades of longitudinal inclusions A, B, C, D and Ds are all less than or equal to level 1, and a size of a brittle inclusion is less than or equal to 5 µm.

Further, a high-cleanliness high-carbon steel cast billet has a C segregation index of 0.96-1.04, and has no crack defect. In a metallographic structure of the wire rod, in percentage by volume, sorbite and pearlite are more than or equal to 97%, and a grain size is 8-10 grade; compared with other matrix areas, a most seriously segregated area on a cross section of the wire rod, in percentage by mass, has a carbon content ratio of less than or equal to 1.04, a Si content ratio of less than or equal to 1.15, a Mn content ratio of less than or equal to 1.12, a Cr content ratio of less than or equal to 1.10, a V content ratio of less than or equal to 1.15, and a hardness difference of less than or equal to 25 HV.

Further, in the low-carbon-emission production method, total C emission from steelmaking, continuous casting and rolling is less than 180 kg/ ton steel.

According to a low-carbon-emission production method for the high-cleanliness high-carbon steel, a production technical process of the low-carbon-emission production method includes: electric furnace smelting, RH vacuum processing, bloom continuous casting, cogging and grinding, high-speed wire-rod rolling, Stelmor air cooling, and finished wire rod obtaining, specifically including the following steps:
Step 1: electric furnace smelting, putting steel scrap into an electric furnace for smelting until the steel scrap completely becomes molten steel, where a charging amount of the electric furnace is 115+/-5 t, hot heel is 15-30%, high-quality steel scrap is selected for smelting, and used electricity comes from hydropower or photovoltaic power generation;
Step 2: electric furnace tapping, blocking slag by a slide plate in the tapping process, selecting a pre-deoxidation way according to a C content in the molten steel at the beginning of tapping, when the C content is less than or equal to 0.35%, adding 10-20% of low-nitrogen carburizer and 20-30% of metallic manganese into a ladle for pre-deoxidation, no bottom blowing in the tapping process, and after the tapping is finished, controlling a bottom-blowing flow rate at 400-800 NL/min; when the C content is more than 0.35%, carrying out rimmed tapping, enabling a bottom-blowing flow rate to be 200-300 NL/min in the whole tapping process; after 90% of tapping is completed, adding silicon carbide, synthetic slag and lime for slag deoxidation and slag formation; and after tapping is finished, conveying the molten steel to RH treatment;
Step 3: RF furnace refining, enabling a RH arrival temperature to be more than or equal to 1595°C, carrying out a rapid vacuumizing treatment upon RH arrival, followed by deoxidation and desulfurization treatments, breaking vacuum to tap steel after a clean circulation treatment, conveying the tapped steel to a continuous casting platform for a holding time of more than 8 min before starting casting;
Step 4: adopting square billet continuous casting, protecting casting in the whole process of continuous casting, employing a high-basicity and low-alumina tundish covering flux, and controlling a fluctuation of a molten steel superheat in a tundish to be less than or equal to 5°C by using electromagnetic induction heating equipment in the tundish, where a tundish superheat is 15-40°C; employing an overall submerged nozzle for casting, where an immersion depth of the submerged nozzle is 10-15 mm, a mold electromagnetic stirring current is 500-900 A, an electromagnetic stirring frequency is 6-8 Hz, and a mold taper is adjusted according to an alloy element content of 1.05-1.15%; controlling a continuous casting speed at 0.50-0.65 m/min, controlling a reduction of a cast billet at 15-28 mm to obtain a cast billet with a C segregation index of 0.96-1.04, and hot-charging and hot-delivering the cast billet, where a surface temperature of a billet is greater than or equal to 450°C, and a corner temperature is greater than or equal to 400°C;
Step 5: carrying out cogging and grinding to control surface quality;
Step 6: carrying out high-speed wire-rod rolling to improve surface decarburization; and
Step 7: carrying out Stelmor air cooling to control cooling intensity and improve structure and properties.

Further, in step 1, the electric furnace is electrified for temperature increase, during an early smelting stage, lime is added and lightly calcined for slag formation, bottom-blowing stirring is activated, where a flow rate of a bottom-blowing argon gas is 5-10 Nm³/min. After the steel scrap is completely molten, the lime is added in batches, lightly calcined and pelletized for slag formation, and a bottom-blowing gas is switched to oxygen after the steel scrap is molten, where a flow rate of the bottom-blowing oxygen is 30-60 Nm³/min, oxygen blowing time is adjusted according to Al, Ti and Si contents in the steel scrap, and a sidewall lance is turned on in the whole process of smelting for argon gas blowing at a flow rate of 2-5 Nm³/min. In the process of bottom oxygen blowing, the lime is added, lightly calcined and pelletized for temperature regulation and dephosphorization, where a T.Fe content in the slag is 15-25%; through foamy slag caused by bottom oxygen blowing and enhanced stirring, process slag flow is promoted, and dephosphorization is enhanced; electric power input is controlled to control a temperature of the molten steel at 1520-1550°C, a P content in the molten steel is reduced below 0.005%, and then slag removal is carried out. After the slag removal is finished, the lime is added, lightly calcined and pelletized for slag formation; basicity of the slag is controlled at 5.0 and more, the T.Fe content is 8-15%, the bottom oxygen blowing is stopped, and is switched to argon blowing, at a flow rate of 5-10 Nm3/min. The electric furnace is electrified at high power for temperature increase, a proper amount of low-nitrogen carburizer is added to adjust the C content in the molten steel, the temperature of the molten steel is increased to above 1645°C, the C content is 0.10-0.50%, an oxygen content is less than or equal to 0.03%, and then tapping is carried out.

Further, in step 2, during electric furnace tapping, 1.0-2.0 kg/t of silicon carbide, 10-12 kg/t of synthetic slag and 1.5-3.5 kg/t of lime are added.

Further, in step 3, the rapid vacuumizing treatment upon RH arrival is specifically as follows: turning on the three water ring pumps and E4, E3, E2 and E1 steam pumps in turn, reducing an operating pressure in the vacuum chamber to below 1 mbar within 5 min, and enabling the lift gas flow rate to be 200-250 Nm³/min and deep vacuum treatment time to be more than or equal to 20 min.

Further, in step 3, the deoxidation treatment is specifically as follows: according to arrival composition, if the C content is more than or equal to 0.35%, carrying out natural carbon deoxidation for more than 5 min under deep vacuum; if the C content is less than 0.35%, adding the low-nitrogen carburizer according to 0.45% of a target value for deoxidation for more than 5 min, then adding the silicon carbide for continuous deoxidation, sampling and testing composition, and adding one or more of the low-nitrogen carburizer, ultra-pure silicon, metallic manganese, ferrochrome and ferrovanadium according to a composition test result for alloying, thereby achieving target composition.

The desulfurization treatment is specifically as follows: continuing a deep vacuum treatment for more than 5 min after the alloying is finished, then turning off three water ring pumps and an E4 steam pump, descending the ladle by 15-25 cm, increasing a pressure in a vacuum chamber to above 20 mbar, reducing a lift gas flow rate to 100-120 Nm³/min, determining an addition amount of a desulfurizer according to an S content in the molten steel, after completing the adding of the desulfurizer in batches, carrying out clean circulation for more than or equal to 5 min, and breaking vacuum to tap the steel.

Further, the square billet continuous casting is employed in step 4, a continuous casting machine is a straight-arc rectangular billet continuous casting machine, and a continuous casting billet has a section size of 300 mm × 390 mm and an arc radius of 12.5 m.

Tundish induction heating power is 2500-3500 KW, a tonnage fluctuation of the tundish during normal casting is less than or equal to 1 ton, the tonnage decreases by less than or equal to 5 tons during tundish exchange, a mold water flow rate is 2700-3000 NL/min, intensive cooling is adopted within 1.5 m of a secondary cooling zone, with a water flow rate of 600-800 NL/min; and soft cooling is adopted in subsequent zones, with a water flow rate of 400-600 NL/min.

Further, in step 5, during cogging and grinding, when bloom casting is employed, the continuous casting billet is heated in a cogging reheating furnace and undergoes soaking and heat preservation, and a rolled billet of 140 mm × 140 mm is obtained after cogging and rolling; magnetic powder inspection is carried out on the rolled billet, then a surface of the rolled billet is completely ground, and spot grinding is carried out on a position with obvious flaw detection defect on the surface, where an average grinding depth is more than or equal to 0.5 mm.

Further, in step 6, during high-speed wire-rod rolling, a high-temperature-resistant coating is sprayed on the surface of the rolled billet after grinding, when a Si content in the high-carbon steel is less than or equal to 0.6%, a coating thickness is 0.1-0.3 mm, when the Si content is 0.6-1.0%, the coating thickness is 0.3-0.5 mm, and when Si content is more than 1.0%, the coating thickness is 0.5-1.0 mm.

The rolled billet after spraying is heated in a steel-rolling reheating furnace and undergoes soaking and heat preservation, a natural gas is used for heating, and an air-fuel ratio is controlled at 9.5-10.1. An initial rolling temperature of the rolled billet after leaving the reheating furnace is 1000-1150°C, a finishing rolling arrival temperature is 850-970°C, and a finishing rolling outbound temperature is 1000-1060°C.

Further, in step 7, during Stelmor air cooling, a rolled wire rod obtained in the high-speed wire-rod rolling procedure employs an air-cooling process controlled by a Stelmor air-cooling line, and a wire laying temperature of the Stelmor air-cooling line is controlled at 850-950°C.

Further, the high-quality steel scrap used by the electric furnace includes, but is not limited to, silicon steel, pipeline steel, bridge steel, an automobile sheet, spring steel, cord steel and cable steel, and includes composition as follows: less than or equal to 0.035% of P, less than or equal to 0.008% of S, less than or equal to 0.015% of Ti, less than or equal to 0.025% of Ni, less than or equal to 0.018% of Cu, less than or equal to 0.006% of Mo, less than or equal to 0.015% of Sn, less than or equal to 0.01% of As, and other conventional C, Si, Al, Mn and Fe elements.

Further, the low-nitrogen carburizer added during electric furnace tapping includes less than or equal to 0.035% of N, more than or equal to 99% of C, and other inevitable impurity elements;
the metallic manganese includes more than or equal to 98.5% of Mn, less than or equal to 0.006% of P, less than or equal to 0.003% of S, less than or equal to 0.0035% of Ti, less than or equal to 0.005% of Al, and other iron and inevitable impurity elements;
the silicon carbide includes more than or equal to 98% of SiC content, and other inevitable impurity elements; and
the synthetic slag added during electric furnace tapping includes main composition as follows: 55-65% of CaO, 10-20% of SiO₂, 3-8% of CaF₂, 1-3% of MnO, 1-5% of MgO, less than or equal to 3% of Al₂O₃, and other inevitable impurity composition. The synthetic slag and the lime are added for slag formation, and the basicity of slag is 2.0-3.5. More than or equal to 90% of synthetic slag has a particle size of less than or equal to 3 mm, more than or equal to 5% of the synthetic slag has the particle size of 3-5 mm, and remaining synthetic slag has the particle size of more than 5 mm; and moisture is less than or equal to 1.0%.

Further, the low-nitrogen carburizer used by RH includes less than or equal to 0.035% of N, more than or equal to 99% of C, and other inevitable impurity elements;
the metallic manganese includes more than or equal to 99% of Mn, less than or equal to 0.003% of Ti, less than or equal to 0.005% of Al, less than or equal to 0.0065% of P, less than or equal to 0.0035% of S, and other iron and inevitable impurity elements;
the silicon carbide includes more than or equal to 98% of SiC, and other inevitable impurity elements;
the ultra-pure silicone includes 80-85% of SiC, less than or equal to 0.0035% of Al, less than or equal to 0.001% of Ti, less than or equal to 0.005% of P, less than or equal to 0.0025% of S, and other iron and inevitable impurity elements;
the ferrochrome includes 55-60% of Cr, less than or equal to 1.8% of C, less than or equal to 0.006% of S, less than or equal to 0.013% of P, and other iron and inevitable impurity elements;
the ferrovanadium includes 45-50% of V, less than or equal to 1.6% of C, less than or equal to 0.005% of S, less than or equal to 0.012% of P, and other iron and inevitable impurity elements; and
the desulfurizer includes composition as follows: 70-80% of CaO, 15-25% of CaF₂, 1-3% of MgO, less than or equal to 2% of SiO₂, and other inevitable impurity composition. More than or equal to 90% of desulfurizer has a particle size of 3-8 mm, and a maximum particle size of the desulfurizer does not exceed 10 mm.

Further, a used ladle brick is a high-strength and high-density magnesia-carbon brick with a flexural strength of more than or equal to 45 MPa, a density of 2.8-3.5 g/cm³ and a porosity of less than or equal to 9.0%. In percentage by mass, the magnesia-carbon brick includes more than or equal to 85% of MgO, 3-8% of C, less than or equal to 3.0% of Al₂O₃, and other inevitable composition.

Further, a refractory used for a dipping tube and a bottom tank of a RH vacuum furnace is a high-quality ultra-low-carbon magnesite-chrome brick with a flexural strength of more than or equal to 48 MPa, a density of 3.2-3.6 g/cm³ and a porosity of less than or equal to 8.0%. In percentage by mass, the magnesite-chrome brick includes less than or equal to 1.5% of C, 85-95% of MgO, 5-12% of Cr₂O₃, and other inevitable composition.

Further, the high-basicity and low-alumina tundish covering flux for continuous casting includes follows: basicity (CaO/SiO₂) of 1.2-1.5, less than or equal to 2% of Al₂O₃, 3-8% of CaF₂, 3-6% of MgO, and other inevitable composition;
70-80% of a magnesia spray coating for an inner wall of the tundish has a particle size of less than or equal to 2 mm, more than 20% of the magnesia spray coating has the particle size of 2-3 mm, and less than or equal to 5% of the magnesia spray coating has the particle size of more than 3 mm; and the magnesia spray coating includes more than or equal to 80% of MgO, 5-10% of CaO, 1-3% of SiO₂, and other inevitable composition; and
mold powder has a melting point of 1000-1100°C and viscosity of 0.3-0.45 Pa•s, and includes mass composition as follows: 15-20% of C, 0.6-0.8% of CaO/SiO₂, 10-15% of Na₂O, less than or equal to 3% of Al₂O₃, less than or equal to 1% of MgO, 3-6% of CaF₂, and other inevitable impurity composition.

Further, a stopper and the nozzle each include a magnesia carbon material. The stopper further includes 80-85% of MgO of MgO, 8-12% of C, less than or equal to 1.5% of Al₂O₃, 1-4% of SiC, 2-3% of SiO₂, and other inevitable impurity composition, and has a density of 2.4-2.7 g/cm³, a porosity of less than or equal to 14%, and a flexural strength of more than or equal to 40 MPa.

An inner wall of the submerged nozzle has a thickness of 5-7 mm, a density of 2.5-2.8 g/cm³ and a porosity of less than or equal to 13%, and includes more than or equal to 90% of MgO and C, 3-5% of SiC, and other inevitable impurity composition.

Further, the continuous casting machine in the continuous casting procedure includes eleventh withdrawal and straightening machines which are arranged in turn in a casting direction. A first withdrawal and straightening machine to a fourth withdrawal and straightening machine are distributed in a straightening segment, a pressure of the first withdrawal and straightening machine is 30-40 bar, and each withdrawal and straightening machine thereafter gradually increases by 5-15 bar. A fifth withdrawal and straightening machine to an eleventh withdrawal and straightening machine are distributed in a horizontal segment, a pressure of the fifth withdrawal and straightening machine is 75-85 bar, and each withdrawal and straightening machine thereafter increases by 5-10 bar, and the pressure of each of the tenth and eleventh withdrawal and straightening machines is reduced by 10-20 bar relative to that of the ninth withdrawal and straightening machine.

Further, the rolled billet is sprayed with a coating for protection prior to charging into the reheating furnace, and more than 90% of coating particles are 100-120 meshes; and composition of the coating includes calcium silicate, calcium aluminate, magnesia-alumina spinel, zirconia, graphite carbon and a small amount of alkali metal oxide, inorganic binder, surfactant and other substances, which do no decompose within 1600°C.

Further, the rolled billet enters the reheating furnace for heating. At a preheating zone, the furnace temperature is controlled at 750-850°C, and time is 40-60 min. At a heating zone, the temperature is 900-1100°C, and time is 60-80 min. A soaking zone is at 1100-1250°C, and time is 60-80 min.

Further, an air-cooling process controlled by Stelmor line is employed, on an air-cooling line, airflow of fans 1# to 3# is 100%, airflow of fans 4# to 7# is 60-80%, airflow of fans 8# and 9# is 40-50%, and airflow of other fans is turned on or off by 10-20%.

Further, a high-cleanliness high-carbon steel wire rod is produced by the method.

Further, the wire rod includes less than or equal to 10 ppm of T.O, more than or equal to 97% of sorbite and pearlite, a C content segregation value of less than or equal to 1.04, has no defects such as a microcrack, a pit, a scab and a scratch on the surface, and has no completely decarburized layer on the surface. The wire rod can be used for producing 1600-2200 MPa high-strength spring steel, 1800-2200 MPa bridge cable steel, a cord steel wire with a drawing diameter of more than 0.05 mm or a high-strength diamond wire.

The present disclosure further claims high-cleanliness high-carbon steel produced by the method provided by the present disclosure.

The present disclosure further claims a wire rod made from the high-cleanliness high-carbon steel.

Further, the wire rod includes less than or equal to 10 ppm of T.O, more than or equal to 97% of sorbite and pearlite, a C content segregation value of less than or equal to 1.04, has no defects such as a microcrack, a pit, a scab and a scratch on the surface, and has no completely decarburized layer on the surface.

The present disclosure further claims 1600-2200 MPa high-strength spring steel, 1800-2200 MPa bridge cable steel, a cord steel wire with a drawing diameter of more than 0.05 mm or a high-strength diamond wire prepared from the wire rod.

### The principle of the smelting process of the present disclosure is as follows:

Cord steel requires excellent drawability and strand torsional properties, spring steel requires high fatigue resistance, and cable steel requires high torsion properties of materials. Such high-performance high-carbon steel wire products have particularly high requirements on gas content, cleanliness, segregation, decarburization and surface quality. To obtain high-purity molten steel, high-homogeneous cast billet and high-cleanliness wire rod under the condition of low-carbon emission. On the basis of conventional smelting process, the present disclosure innovatively designs an electric furnace-RH vacuum short-flow high-efficiency low-carbon-emission smelting technology.

At first, during a smelting stage, scrap raw materials with low sulfur, low phosphorus and low content in non-oxidizing elements are selected, and the sulfur content in the molten steel is controlled by combining light desulfurization and RH desulfurization operations. By side-blowing of argon and bottom-blowing of oxygen via a furnace wall lance of the electric furnace, the gas absorption during the electric furnace smelting stage is reduced. An appropriate amount of oxygen is blown in from the bottom to decarburize and produce a large amount of CO gas, thereby further enhancing denitrification of molten steel, removing impurity elements such as Al, Ti and P brought in by steel scrap, and providing chemical heat for the molten steel to reduce the temperature rise caused by electrification. In addition, vigorous molten steel stirring effect via bottom oxygen blowing, coupled with lime and pelletizing slag formation, enables large-scale bottom-blowing stirring for dephosphorization for ultra-low phosphorus steelmaking. Integrated with process slag flow and slag removal operations during electric furnace smelting process, impurity elements are substantially eliminated.

Secondly, the electric furnace tapping employs a hot heel operation to prepare for improving smelting efficiency of a next heat. By adopting weak deoxidation or rimmed tapping in the tapping process, the molten steel contains a certain oxygen content, air nitrogen absorption is greatly reduced during tapping, enabling direct RH treatment immediately after tapping. Carbon deoxidation is utilized at the early stage of RH, and the N content in the molten steel is further reduced by combining deep vacuum operation. After deoxidation alloying in the middle and late stage, the oxygen content in the molten steel is reduced to an extremely low level, and then a circulating flow rate and strength of the molten steel are reduced through technical parameters, thereby alleviating the problem of inclusion backflow caused by erosion of refractories and turbulence and promoting further floating of the inclusions. By implementing partial deoxidation or rimmed tapping in electric furnace followed by direct RH vacuum treatment, the carbon, silicon and manganese are used for deoxidation to achieve precise control of inclusions, which mainly controls SiO₂-MnO inclusions with high SiO₂ content, thereby enabling engineered regulation of inclusion composition. A control target of low gas content, low impurity element and high cleanliness is achieved by adopting the technology of the present disclosure. The present disclosure overcomes the technical problems of high content in gas and impurity elements in the electric furnace process, difficult control of cleanliness and the like.

Furthermore, through a process of weak oxygen blowing at the bottom of the electric furnace, integrated with process slag flow and slag removal operations, the Al, Ti and P contents are reduced to an extremely low level. In addition, the design of partial deoxidation or rimmed tapping and high-basicity slag system can enhance the oxidation of Al and Ti elements, absorb deoxidation products such as Al and Ti, weaken the erosion of refractories, and reduce the generation of endogenous or exogenous brittle inclusions such as alumina, magnesia-alumina spinel, titanium oxide and titanium nitride in the subsequent process. The use of a ladle refractory, a vacuum furnace refractory and continuous casting tundish component with low alumina content can significantly reduce alumina inclusion sources. Concurrently, the quality of refractories is required to be improved, which can reduce the erosion of refractories and avoid magnesium foreign inclusions. According to the relevant study results, the high-melting-point foreign inclusions such as alumina, magnesia and magnesia-alumina spinel are key problems that cause the drawing fracture and fatigue failure of high-end wire products. Therefore, a weak circulation stirring mode is adopted in the middle and late stage of the vacuum furnace to avoid continuous high-intensity erosion of the refractory by molten steel, so that a small number of composite inclusions formed by erosion of refractories are further removed by floating, and soft stirring and holding are carried out after vacuum breaking to promote the floating of inclusions, thereby obtaining high-cleanliness molten steel.

In addition, in the process of continuous casting, high-magnesium gunning materials are used to adsorb inclusions, and meanwhile, tundish electromagnetic induction heating, mold electromagnetic stirring and other technologies are used to further promote the removal of inclusions by floating. In the process of continuous casting, the superheat casting is stabilized in a narrow range, and a proper superheat is adjusted according to the C and Si contents of the molten steel. When the C content is low and the Si content is high, the superheat is appropriately increased, which avoids that the hardness of billet is too high due to low superheat and cracks are easily caused by reduction or straightening, and the appropriate increase of the superheat is beneficial to reduction. The segregation problem of the cast billet can be significantly improved by combined with the appropriately controlled reduction. When the C content is high and the Si content is low, the superheat is moderately reduced, but it is still higher than that of the conventional process. Appropriate reduction process and cooling water flow rate are matched to ensure the proportion of a liquid phase region in each zone, and a gradual decrease mode of reduction is adopted to ensure the constant total reduction, weaken central segregation, and avoid internal cracks caused by excessive reduction. Controlling the stable fluctuation of mold liquid level can prevent the occurrence of mold slag entrapment. The partial deoxidation process of converter tapping, RH vacuum degassing and other technologies, coupled with continuous casting cooling intensity control and constant speed casting technology, can reduce the generation of precipitates.

Finally, the reheating furnace adopts the technical idea of high-temperature heating and holding time prolonging to further promote uniform diffusion of alloy elements, thereby reducing the problems such as segregation and mesh carbon. Meanwhile, after cogging, a full grinding technology is adopted to eliminate the surface quality problem of an original cast billet, and applying high-temperature resistant coatings to the rolled billet can alleviate surface decarburization of the cast billet and improve microstructural homogeneity. Sorbite and pearlite structures are obtained by using a controlled cooling technology, martensite and ferrite structures are reduced, and high-cleanliness high-carbon steel wire rod products are obtained.

### The present disclosure has beneficial effects as follows:

(1) Compared with the conventional production process for high-carbon steel wire rods, the processes of blast furnace, KR hot metal pretreatment and LF refining are cancelled, and short-flow production is achieved. In addition, the electric furnace adopts full-scrap green power energy smelting mode and high-efficiency carbon deoxidation mode, which reduces the carbon emission and alloy consumption of steelmaking. The high-efficiency hot-charging and hot-delivery mode of continuous casting greatly reduces the energy consumption of the steel rolling process. The short-flow production mode of high-carbon steel wire rods developed and designed has low carbon emission and low alloy consumption, which is of great significance to environmental protection, cost and quality.
(2) In the conventional production process for high-carbon steel wire rods, a general desulfurization task is mainly carried out at KR and LF refining stations. In the present disclosure, the KR and LF refining processes are cancelled, and an S content in molten steel is jointly controlled at an extremely low level in the electric furnace and RH process, thereby shortening the smelting process, effectively avoiding the change of slag entrapment and inclusion types caused by a large amount of desulfurization in refining, effectively reducing the size of inclusions and accurately controlling the types of inclusions. In addition, canceling refining process can greatly improve production efficiency and reduce smelting cost.
(3) Sidewall gas-blowing protection, integrated with bottom argon and oxygen blowing smelting mode, can effectively control nitrogen increase in molten steel in the electric furnace smelting process. Combined with partial deoxidation or rimmed tapping in the electric furnace followed by direct RH vacuum treatment, the problem of nitrogen absorption of the molten steel in tapping process can be greatly reduced, and the CO generated by carbon deoxidation reaction in RH deep vacuum can assist the nitrogen removal of the molten steel. In addition, argon bubbles blown with a large lift gas flow rate can also assist the nitrogen removal to further reduce N and O contents, which is particularly beneficial to controlling the N content and the cleanliness of the molten steel.
(4) Compared with sidewall lance oxygen blowing, an electric furnace bottom oxygen blowing mode has stronger stirring intensity on the molten steel and higher decarburization and dephosphorization efficiency. In addition, harmful elements such as Al and Ti brought by steel scrap are removed, a heat source is provided for the electric furnace smelting process, and electrifying time is reduced. Refectories for the ladle, RH vacuum furnace and continuous casting and accessories are all high-cleanliness standard materials, which can reduce the erosion problem caused by high-carbon and silicate inclusions and effectively control foreign inclusions, thereby providing an effective control method for foreign harmful inclusions in high-quality wire rods.
(5) In the whole process system design, the control of various impurity elements and inclusions in steel is considered, thereby greatly reducing the size and quantity of endogenous and exogenous inclusions while reducing the impurity elements and gas content in steel. On the basis of partial deoxidation or rimmed tapping in the electric furnace followed by direct RH vacuum treatment, calcium silicate-based stable-phase high-basicity synthetic slag is used in the electric furnace tapping process, which further reduces the transmission of CaO inclusions to the molten steel and enhances the adsorption of SiO₂ acidic inclusions. Deoxidation alloying is carried out under a RH vacuum condition to implement accurate control of high SiO₂ composition inclusions.
(6) The use of accurate control of the molten steel superheat in a tundish and segment-based accurate soft reduction technology can reduce segregation of the cast billet. Combined with a billet coating protection technology, a high-temperature and long-term heat preservation technology of the reheating furnace is implemented to further promote uniform diffusion of elements and effectively control surface decarburization problem of the cast billet. Combined with the Stelmor air cooling control process, the structure and properties of the wire rod are controlled, and the problems of segregation and mesh carbon of the wire rod are alleviated, so that the quality of the wire rod is improved in all directions.

The electric furnace provided by the present disclosure adopts full-scrap smelting, followed by high-carbon and high-temperature tapping. Green power smelting is adopted to reduce oxygen blowing amount of the electric furnace. During electric furnace tapping, partial carbon powder and ferromanganese are added to enable partial deoxidation/no deoxidation control technology, thereby regulating the oxygen content in molten steel, reducing Al and Ti contents and reducing nitrogen absorption of the molten steel. Afterwards, high-basicity synthetic slag with specific phase is added to strengthen the adsorption of inclusions and control the types of the inclusions. The tapped steel directly enters the RH vacuum furnace without refining treatment. Stepwise deoxidation is adopted in the RH vacuum treatment process, the silicon carbide is used for deoxidation at first to reduce carbon emission and control total oxygen content and the types of the inclusions. Circulation flow is reduced by turning off partial steam pumps, reducing an immersion depth of a dipping tube and increasing the gas flow rate, thereby reducing the erosion of refractories, enhancing the removal of the inclusions and improving the cleanliness. Combined with the control of some physical and chemical indexes of tundish refractories, alloys and accessories, the foreign brittle inclusions are reduced. During continuous casting, the covering flux, the mold powder and the like are controlled to adsorb inclusions to improve cleanliness. During the continuous, technologies such as tundish induction heating, superheat control, mold taper, large reduction and accurate control of cooling water flow rate are adopted to reduce segregation. Implementing high-temperature heating, billet protection, heating time prolonging and fan airflow control can reduce segregation and improve the quality of the wire rod.

### BRIEF DESCRIPTION OF THE DRAWINGS

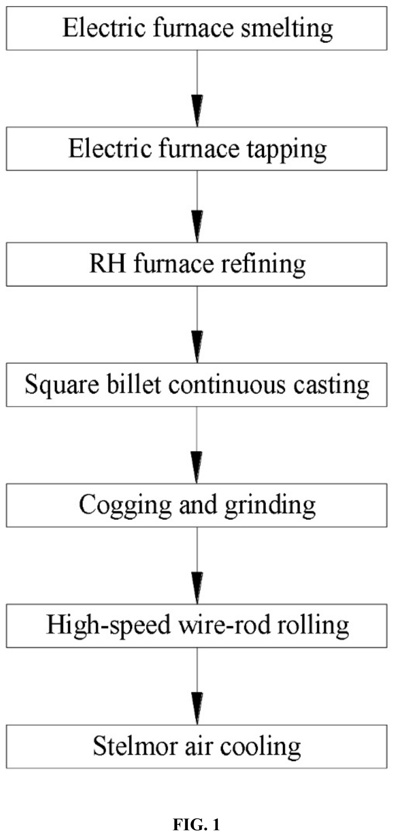

FIG. 1 is a flowchart according to the present disclosure.

### DETAILED DESCRIPTION OF THE EMBODIMENTS

The present disclosure is further described below with reference to accompanying drawings and specific implementations. It should be understood that the following specific implementations are only used to illustrate the present disclosure and are not used to limit the scope of the present disclosure.

A low-carbon-emission production method for high-cleanliness high-carbon steel, in addition to alloy elements such as Si, Mn, Cr and V as well as Fe element, further includes the following chemical composition in percentage by mass: 0.5-1.0% of C, less than or equal to 0.006% of P, less than or equal to 0.0035% of S, less than or equal to 0.0010% of T.O, less than or equal to 0.0030% of N, less than or equal to 0.0002% of H, less than or equal to 0.0015% of Alt, less than or equal to 0.0008% of Ti, less than or equal to 0.02% of Ni, less than or equal to 0.015% of Cu, less than or equal to 0.005% of Mo, less than or equal to 0.010% of Sn, and less than or equal to 0.008% of As.

Inclusions in the high-cleanliness high-carbon steel wire rod are mainly SiO₂-MnO low-melting-point inclusions, a number density of inclusions above 1 µm is less than or equal to 5 per mm², a number density of inclusions above 5 µm is less than or equal to 0.12 per mm², a maximum size of a transverse inclusion is less than or equal to 15 µm, grades of longitudinal inclusions A, B, C, D and Ds are all less than or equal to level 1, and a size of a brittle inclusion is less than or equal to 5 µm.

A high-cleanliness high-carbon steel billet has a C segregation index of 0.96-1.04, and has no crack defect. In a metallographic structure of the wire rod, in percentage by volume, sorbite and pearlite are more than or equal to 97%, and a grain size is 8-10 grade. Compared with other matrix areas, a most seriously segregated area on a cross section of the wire rod, in percentage by mass, has a carbon content ratio of less than or equal to 1.04, a Si content ratio of less than or equal to 1.15, a Mn content ratio of less than or equal to 1.12, a Cr content ratio of less than or equal to 1.10, a V content ratio of less than or equal to 1.15, and a hardness difference of less than or equal to 25 HV.

According to the low-carbon-emission production method, total C emission from steelmaking, continuous casting and rolling is less than 180 kg/ ton steel.

According to a low-carbon-emission production method for the high-cleanliness high-carbon steel, a production technical process of the low-carbon-emission production method includes: electric furnace smelting, RH vacuum processing, bloom continuous casting, cogging and grinding, high-speed wire-rod rolling, Stelmor air cooling, and finished wire rod obtaining, specifically including the following steps.

Step 1: During electric furnace smelting, steel scrap is put into an electric furnace for smelting until the steel scrap completely becomes molten steel, where a charging amount of the electric furnace is 115+/-5 t, hot heel is 15-30%, high-quality steel scrap is selected for smelting, and used electricity comes from hydropower or photovoltaic power generation.

The electric furnace is electrified for temperature increase, during an early smelting stage, lime is added and lightly calcined for slag formation, bottom-blowing stirring is activated, where a flow rate of a bottom-blowing argon gas is 5-10 Nm³/min. After the steel scrap is completely molten, the lime is added in batches, lightly calcined and pelletized for slag formation, and a bottom-blowing gas is switched to oxygen after the steel scrap is molten, where a flow rate of the bottom-blowing oxygen is 30-60 Nm³/min, oxygen blowing time is adjusted according to Al, Ti and Si contents in the steel scrap, and a sidewall lance is turned on in the whole process of smelting for argon gas blowing at a flow rate of 2-5 Nm³/min. In the process of bottom oxygen blowing, the lime is added, lightly calcined and pelletized for temperature regulation and dephosphorization, where a T.Fe content in the slag is 15-25%. Through foamy slag caused by bottom oxygen blowing and enhanced stirring, process slag flow is promoted, and dephosphorization is enhanced. Electric power input is controlled to control a temperature of the molten steel at 1520-1550°C, a P content in the molten steel is reduced below 0.005%, and then slag removal is carried out. After the slag removal is finished, the lime is added, lightly calcined and pelletized for slag formation. Basicity of the slag is controlled at 5.0 and more, the T.Fe content is 8-15%, the bottom oxygen blowing is stopped, and is switched to argon blowing, at a flow rate of 5-10 Nm³/min. The electric furnace is electrified at high power for temperature increase, a proper amount of low-nitrogen carburizer is added to adjust the C content in the molten steel, the temperature of the molten steel is increased to above 1645°C, the C content is 0.10-0.50%, an oxygen content is less than or equal to 0.03%, and then tapping is carried out.

The high-quality steel scrap used by the electric furnace includes, but is not limited to, silicon steel, pipeline steel, bridge steel, an automobile sheet, spring steel, cord steel and cable steel, and includes composition as follows: less than or equal to 0.035% of P, less than or equal to 0.008% of S, less than or equal to 0.015% of Ti, less than or equal to 0.025% of Ni, less than or equal to 0.018% of Cu, less than or equal to 0.006% of Mo, less than or equal to 0.015% of Sn, less than or equal to 0.01% of As, and other conventional C, Si, Al, Mn and Fe elements.

Step 2: During electric furnace tapping, slag is blocked by a slide plate in the tapping process, a pre-deoxidation way is selected according to a C content in the molten steel at the beginning of tapping, when the C content is less than or equal to 0.35%, 10-20% of low-nitrogen carburizer and 20-30% of metallic manganese are added into a ladle for pre-deoxidation, and there is no bottom blowing in the tapping process. After the tapping is finished, a bottom-blowing flow rate is controlled at 400-800 NL/min. When the C content is more than 0.35%, rimmed tapping is carried out, a bottom-blowing flow rate is enabled to be 200-300 NL/min in the whole tapping process. After 90% of tapping is completed, 1.0-2.0 kg/t of silicon carbide, 10-20 kg/t of synthetic slag and 1.5-3.5 kg/t of lime are added for slag deoxidation and slag formation; and after tapping is finished, the molten steel is conveyed to RH treatment.

The low-nitrogen carburizer added during electric furnace tapping includes less than or equal to 0.035% of N, more than or equal to 99% of C, and other inevitable impurity elements.

The metallic manganese includes more than or equal to 98.5% of Mn, less than or equal to 0.006% of P, less than or equal to 0.003% of S, less than or equal to 0.0035% of Ti, less than or equal to 0.005% of Al, and other iron and inevitable impurity elements.

The silicon carbide includes more than or equal to 98% of SiC content, and other inevitable impurity elements.

The synthetic slag added during electric furnace tapping includes main composition as follows: 55-65% of CaO, 10-20% of SiO₂, 3-8% of CaF₂, 1-3% of MnO, 1-5% of MgO, less than or equal to 3% of Al₂O₃, and other inevitable impurity composition. The synthetic slag and the lime are added for slag formation, and the basicity of slag is 2.0-3.5. More than or equal to 90% of synthetic slag has a particle size of less than or equal to 3 mm, more than or equal to 5% of the synthetic slag has the particle size of 3-5 mm, and remaining synthetic slag has the particle size of more than 5 mm; and moisture is less than or equal to 1.0%.

A used ladle brick is a high-strength and high-density magnesia-carbon brick with a flexural strength of more than or equal to 45 MPa, a density of 2.8-3.5 g/cm³ and a porosity of less than or equal to 9.0%. In percentage by mass, the magnesia-carbon brick includes more than or equal to 85% of MgO, 3-8% of C, less than or equal to 3.0% of Al₂O₃, and other inevitable composition.

Step 3: During RF furnace refining, a RH arrival temperature is more than or equal to 1595°C, a rapid vacuumizing treatment is carried out upon RH arrival, followed by deoxidation and desulfurization treatments, the vacuum is broken to tap steel after a clean circulation treatment, the tapped steel is conveyed to a continuous casting platform for a holding time of more than 8 min before starting casting.

The rapid vacuumizing treatment upon RH arrival is specifically as follows: turning on the three water ring pumps and E4, E3, E2 and E1 steam pumps in turn, reducing an operating pressure in the vacuum chamber to below 1 mbar within 5 min, and enabling the lift gas flow rate to be 200-250 Nm³/min and deep vacuum treatment time to be more than or equal to 20 min.

According to arrival composition, if the C content is more than or equal to 0.35%, natural carbon deoxidation is carried out for more than 5 min under deep vacuum. If the C content is less than 0.35%, the low-nitrogen carburizer is added according to 0.45% of a target value for deoxidation for more than 5 min, then the silicon carbide is added for continuous deoxidation, composition is sampled and tested, and one or more of the low-nitrogen carburizer, ultra-pure silicon, metallic manganese, ferrochrome and ferrovanadium is added according to a composition test result for alloying, thereby achieving target composition.

The desulfurization treatment is specifically as follows: a deep vacuum treatment is continued for more than 5 min after the alloying is finished, then three water ring pumps and an E4 steam pump are turned off, the ladle is descended by 15-25 cm, a pressure in a vacuum chamber is increased to above 20 mbar, a lift gas flow rate is reduced to 100-120 Nm³/min, an addition amount of a desulfurizer is determined according to an S content in the molten steel, after completing the adding of the desulfurizer in batches, clean circulation is carried out for more than or equal to 5 min, and then vacuum is broken to tap the steel.

The low-nitrogen carburizer used by RH includes less than or equal to 0.035% of N, more than or equal to 99% of C, and other inevitable impurity elements.

The metallic manganese includes more than or equal to 99% of Mn, less than or equal to 0.003% of Ti, less than or equal to 0.005% of Al, less than or equal to 0.0065% of P, less than or equal to 0.0035% of S, and other iron and inevitable impurity elements.

The silicon carbide includes more than or equal to 98% of SiC, and other inevitable impurity elements.

The ultra-pure silicone includes 80-85% of SiC, less than or equal to 0.0035% of Al, less than or equal to 0.001% of Ti, less than or equal to 0.005% of P, less than or equal to 0.0025% of S, and other iron and inevitable impurity elements.

The ferrochrome includes 55-60% of Cr, less than or equal to 1.8% of C, less than or equal to 0.006% of S, less than or equal to 0.013% of P, and other iron and inevitable impurity elements.

The ferrovanadium includes 45-50% of V, less than or equal to 1.6% of C, less than or equal to 0.005% of S, less than or equal to 0.012% of P, and other iron and inevitable impurity elements.

The desulfurizer includes composition as follows: 70-80% of CaO, 15-25% of CaF₂, 1-3% of MgO, less than or equal to 2% of SiO₂, and other inevitable impurity composition. More than or equal to 90% of desulfurizer has a particle size of 3-8 mm, and the maximum particle size of the desulfurizer does not exceed 10 mm.

A refractory used for a dipping tube and a bottom tank of a RH vacuum furnace is a high-quality ultra-low-carbon magnesite-chrome brick with a flexural strength of more than or equal to 48 MPa, a density of 3.2-3.6 g/cm³ and a porosity of less than or equal to 8.0%. The magnesite-chrome brick includes less than or equal to 1.5% of C, 85-95% of MgO, 5-12% of Cr₂O₃, and other inevitable composition.

Step 4: Square billet continuous casting is adopted in step 4, a continuous casting machine is a straight-arc rectangular billet continuous casting machine, and a continuous casting billet has a section size of 300 mm × 390 mm and an arc radius of 12.5 m.

Casting is protected in the whole process of continuous casting, a high-basicity and low-alumina tundish covering flux is adopted, a fluctuation of a molten steel superheat in a tundish is controlled to be less than or equal to 5°C by using electromagnetic induction heating equipment in the tundish, where a tundish superheat is 15-40°C. Induction heating power of the tundish is 2500-3500 KW, a tonnage fluctuation of the tundish during normal casting is less than or equal to 1 ton, the tonnage decreases by less than or equal to 5 tons during tundish exchange.

An overall submerged nozzle is used for casting, where an immersion depth of the submerged nozzle is 10-15 mm, a mold electromagnetic stirring current is 500-900 A, an electromagnetic stirring frequency is 6-8 Hz, and a mold taper is adjusted according to an alloy element content of 1.05-1.15%. A mold water flow rate is at 2700-3000 NL/min, intensive cooling is adopted within 1.5 m of a secondary cooling zone at a water flow rate of 600-800 NL/min, and soft cooling is adopted in subsequent zones at a water flow rate of 400-600 NL/min.

A continuous casting speed is controlled at 0.50-0.65 m/min, a reduction amount of a cast billet is controlled at 15-28 mm to obtain a cast billet with a C segregation index of 0.96-1.04, and the cast billet is hot-charged and hot-delivered, where a surface temperature of the billet is greater than or equal to 450°C, and a corner temperature is greater than or equal to 400°C.

The continuous casting machine in the continuous casting procedure includes eleventh withdrawal and straightening machines which are arranged in turn in a casting direction. A first withdrawal and straightening machine to a fourth withdrawal and straightening machine are distributed in a straightening segment, a pressure of the first withdrawal and straightening machine is 30-40 bar, and each withdrawal and straightening machine thereafter gradually increases by 5-15 bar. A fifth withdrawal and straightening machine to an eleventh withdrawal and straightening machine are distributed in a horizontal segment, a pressure of the fifth withdrawal and straightening machine is 75-85 bar, and each withdrawal and straightening machine thereafter increases by 5-10 bar, and the pressure of each of the tenth and eleventh withdrawal and straightening machines is reduced by 10-20 bar relative to that of the ninth withdrawal and straightening machine.

The high-basicity and low-alumina tundish covering flux for continuous casting includes follows: basicity (CaO/SiO₂) of 1.2-1.5, less than or equal to 2% of Al₂O₃, 3-8% of CaF₂, 3-6% of MgO, and other inevitable composition.

70-80% of a magnesia spray coating for an inner wall of the tundish has a particle size of less than or equal to 2 mm, more than 20% of the magnesia spray coating has the particle size of 2-3 mm, and less than or equal to 5% of magnesia spray coating has the particle size of more than 3 mm. The magnesia spray coating includes more than or equal to 80% of MgO, 5-10% of CaO, 1-3% of SiO₂, and other inevitable composition.

Mold powder has a melting point of 1000-1100°C and viscosity of 0.3-0.45 Pa•s, and includes mass composition as follows: 15-20% of C, 0.6-0.8% of CaO/SiO₂, 10-15% of Na₂O, less than or equal to 3% of Al₂O₃, less than or equal to 1% of MgO, 3-6% of CaF₂, and other inevitable impurity composition.

A stopper and the nozzle each include a magnesia carbon material. The stopper further includes 80-85% of MgO, 8-12% of C, less than or equal to 1.5% of Al₂O₃, 1-4% of SiC, 2-3% of SiO₂, and other inevitable impurity composition, and has a density of 2.4-2.7 g/cm³, a porosity of less than or equal to 14%, and a flexural strength of more than or equal to 40 MPa.

An inner wall of the submerged nozzle has a thickness of 5-7 mm, a density of 2.5-2.8 g/cm³ and a porosity of less than or equal to 13%, and includes more than or equal to 90% of MgO and C, 3-5% of SiC, and other inevitable impurity composition.

Step 5: Cogging and grinding are carried out to control surface quality. When bloom casting is employed, the continuous casting billet is heated in a cogging reheating furnace and undergoes soaking and heat preservation, and a rolled billet of 140 mm × 140 mm is obtained after cogging and rolling. Magnetic powder inspection is carried out on the rolled billet, then a surface of the rolled billet is completely ground, and spot grinding is carried out on a position with obvious flaw detection defect on the surface, where an average grinding depth is more than or equal to 0.5 mm.

During cogging and rolling, the billet is subjected to heat preservation after reaching a target temperature in a reheating furnace. At a preheating zone, a furnace temperature is controlled at 600-800°C, and a heating rate is 10-20°C/min. At a heating zone, a temperature is 850-1150°C, and a heating rate is 20-30°C/min. A soaking zone is at 1150-1250°C, and total in-furnace time is 280-320 min. Then cogging and rolling are carried out at an initial rolling temperature of 1100-1220°C, and a cogging feedstock is a square rolled billet with a cross section of 140 mm×140 mm.

Step 6: High-speed wire-rod rolling is carried out to improve surface decarbonization. A high-temperature-resistant coating is sprayed on the surface of the rolled billet after grinding, when a Si content in the high-carbon steel is less than or equal to 0.6%, a coating thickness is 0.1-0.3 mm, when the Si content is 0.6-1.0%, the coating thickness is 0.3-0.5 mm, and when Si content is more than 1.0%, the coating thickness is 0.5-1.0 mm.

the rolled billet is sprayed with a coating for protection prior to charging into the reheating furnace, and more than 90% of coating particles are 100-120 meshes; and composition of the coating includes calcium silicate, calcium aluminate, magnesia-alumina spinel, zirconia, graphite carbon and a small amount of alkali metal oxide, inorganic binder, surfactant and other substances, which do no decompose within 1600°C.

The rolled billet enters the reheating furnace for heating. At a preheating zone, the furnace temperature is controlled at 750-850°C, and time is 40-60 min. At a heating zone, the temperature is 900-1100°C, and time is 60-80 min. A soaking zone is at 1100-1250°C, and time is 60-80 min.

The rolled billet after spraying is heated in a steel-rolling reheating furnace and undergoes soaking and heat preservation, a natural gas is used for heating, and an air-fuel ratio is controlled at 9.5-10.1. An initial rolling temperature of the rolled billet after leaving the reheating furnace is 1000-1150°C, a finishing rolling arrival temperature is 850-970°C, and a finishing rolling outbound temperature is 1000-1060°C.

Step 7: Stelmor air cooling is carried out to control cooling intensity and improve structure and properties. A rolled wire rod obtained in the high-speed wire-rod rolling procedure employs an air-cooling process controlled by a Stelmor air-cooling line, and a wire laying temperature of the Stelmor air-cooling line is controlled at 850-950°C.

The air-cooling process controlled by Stelmor line is employed, on an air-cooling line, airflow of fans 1# to 3# is 100%, airflow of fans 4# to 7# is 60-80%, airflow of fans 8# and 9# is 40-50%, and airflow of other fans is turned on or off by 10-20%.

A high-cleanliness high-carbon steel wire rod produced by the method includes less than or equal to 10 ppm of T.O, more than or equal to 97% of sorbite and pearlite, a C content segregation value of less than or equal to 1.04, has no defects such as a microcrack, a pit, a scab and a scratch on the surface, and has no completely decarburized layer on the surface. The wire rod can be used for producing 1600-2200 MPa high-strength spring steel, 1800-2200 MPa bridge cable steel, a cord steel wire with a drawing diameter of more than 0.05 mm or a high-strength diamond wire.

### Embodiment

In addition to alloy elements such as Si, Mn, Cr and V as well as Fe element, the high-cleanliness high-carbon steel wire rod further includes the following chemical composition in percentage by mass: 0.5-1.0% of C, less than or equal to 0.006% of P, less than or equal to 0.0035% of S, less than or equal to 0.0010% of T.O, less than or equal to 0.0030% of N, less than or equal to 0.0002% of H, less than or equal to 0.0015% of Alt, less than or equal to 0.0008% of Ti, less than or equal to 0.02% of Ni, less than or equal to 0.015% of Cu, less than or equal to 0.005% of Mo, less than or equal to 0.010% of Sn, and less than or equal to 0.008% of As.

The technical production process of the present disclosure is introduced with spring steel 55SiCr/65Mn, cord steel 72A/82A/97A and cable steel 87B/92Si as examples.

Spring steel 55SiCr includes the following chemical composition in percentage by mass: 0.50-0.60% of C, 1.35-1.65% of Si, 0.60-0.80% of Mn, 0.55-0.80% of Cr, and 0.15-0.35% of V.

Spring steel 65Mn includes the following chemical composition in percentage by mass: 0.60-0.70% of C, 0.20-0.40% of Si, and 0.90-1.00% of Mn.

Cord wire 72A includes the following chemical composition in percentage by mass: 0.70-0.78% of C, 0.15-0.30% of Si, and 0.50-0.60% of Mn.

Cord wire 82A includes the following chemical composition in percentage by mass: 0.78-0.86% of C, 0.15-0.35% of Si, and 0.50-0.65% of Mn.

Cord wire 97A includes the following chemical composition in percentage by mass: 0.95-1.00% of C, 0.15-0.30% of Si, and 0.35-0.45% of Mn.

Cable steel 87B includes the following chemical composition in percentage by mass: 0.85-0.90% of C, 0.45-0.60% of Si, 0.70-0.85% of Mn, 0.20-0.35% of Cr, and 0.02-0.05% of V.

Cable steel 92Si includes the following chemical composition in percentage by mass: 0.90-0.95% of C, 1.1-1.3% of Si, 0.75-0.90% of Mn, 0.20-0.35% of Cr, and 0.01-0.04% of V.

According to a low-carbon-emission production method for high-cleanliness high-carbon steel, a production technical process of the low-carbon-emission production method includes: electric furnace smelting, RH vacuum, bloom continuous casting, cogging and grinding, high-speed wire-rod rolling, Stelmor air cooling, and finished wire rod obtaining, specifically including the following steps.

### Step 1: Electric furnace smelting

High-quality steel scrap is put into the electric furnace for smelting, a sidewall lance is turned on for argon blowing in the whole process of smelting until the steel scrap completely becomes molten steel, and all electricity used by the electric furnace comes from hydropower or photovoltaic power generation. During an early stage of electric furnace smelting, the electric furnace is electrified to raise a temperature, lime is added and lightly calcined for slag formation, bottom-blowing stirring is activated, and an argon is blown from the bottom for stirring. After the steel scrap is completely melted, the lime is added in batches, lightly calcined and pelletized for slag formation. After the steel scrap is melted, the bottom blowing is switched to oxygen blowing, and the oxygen is blown in from the bottom for stirring, where oxygen blowing time is adjusted according to Al, Ti and Si contents in the steel scrap, thereby removing participating alloy elements and C elements in the steel scrap. In the bottom oxygen blowing process, the lime is added, light calcined and pelletized for temperature regulation and dephosphorization, high basicity and high oxidation of the slag are controlled by lime and pellets. Process slag flow is promoted through foamy slag caused by bottom oxygen blowing and enhanced stirring, thereby enhancing dephosphorization. Electrifying power is controlled to stabilize a temperature of the molten steel at a relatively low temperature range, which is suitable for slag-metal reactions for dephosphorization. The flowing slag discharges the slag containing P, and the P content in the molten steel is reduced to below 0.005%, and then the slag removal is carried out. After slag removal, the lime is added again, light calcined and pelletized for slag formation, thereby forming high-basicity and medium-oxidation slag for continuous dephosphorization. In addition, bottom oxygen blowing is stopped and switched to argon blowing, high-power electrifying is carried out to raise the temperature, and an appropriate amount of low-nitrogen carburizer is added to adjust the C content in the molten steel, and tapping is carried out when the temperature, C content and oxygen content in the molten steel reach the target.

The high-quality steel scrap used by the electric furnace includes, but is not limited to, silicon steel, pipeline steel, bridge steel, an automobile sheet, spring steel, cord steel, cable steel, and includes composition as follows: less than or equal to 0.035% of P, less than or equal to 0.008% of S, less than or equal to 0.015% of Ti, less than or equal to 0.025% of Ni, less than or equal to 0.018% of Cu, less than or equal to 0.006% of Mo, less than or equal to 0.015% of Sn, less than or equal to 0.01% of As, and the rest of conventional C, Si, Al, Mn and Fe elements.

**Table 1 Key Electric Furnace Smelting Parameters for Spring steel**

| Steel grade | Parameter | Charging amount , t | Hot heel, % | Flow rate of bottom-blowing argon at early stage of smelting, Nm³/min | Flow rate of bottom-blowing oxygen, Nm³/min | Argon flow rate of sidewall lance, Nm³/m in | Slag T.Fe at oxygen blowing stage, % | Molten steel temperature at oxygen blowing stage, % |
|---|---|---|---|---|---|---|---|---|
| 55Si Cr | Embodiment 1 | 115 | 20 | 5 | 30 | 2 | 15 | 1520 |
| | Embodiment 2 | 120 | 15 | 9 | 55 | 3 | 18 | 1540 |
| | Embodiment 3 | 118 | 20 | 7 | 40 | 5 | 25 | 1535 |
| 65Mn | Embodiment 4 | 110 | 30 | 10 | 60 | 5 | 22 | 1550 |
| | Embodiment 5 | 116 | 25 | 6 | 50 | 2 | 17 | 1546 |
| | Embodiment 6 | 119 | 28 | 8 | 45 | 3 | 20 | 1541 |

**Table 2 Key Electric Furnace Smelting Endpoint Parameters for Spring Steel**

| Steel grade | Parameter | Basicity of slag | Slag T.Fe | Temperature, °C | Tapping C, % | Tapping O, % | Tapping P, % |
|---|---|---|---|---|---|---|---|
| 55SiCr | Embodiment 1 | 5.5 | 10 | 1665 | 0.15 | 0.0300 | 0.0033 |
| | Embodiment 2 | 6.3 | 14 | 1650 | 0.35 | 0.0145 | 0.0060 |
| | Embodiment 3 | 5.0 | 8 | 1658 | 0.28 | 0.0116 | 0.0038 |
| 65Mn | Embodiment 4 | 8.5 | 9 | 1653 | 0.50 | 0.0085 | 0.0045 |
| | Embodiment 5 | 7.6 | 13 | 1645 | 0.10 | 0.0279 | 0.0055 |
| | Embodiment 6 | 9.3 | 15 | 1670 | 0.46 | 0.0132 | 0.0043 |

**Table 3 Key Electric Furnace Smelting Parameters for Cord Steel**

| Steel grade | Parameter | Charging amount , t | Hot heel, % | Flow rate of bottom-blowing argon at early stage of smelting, Nm³/min | Flow rate of bottom-blowing oxygen, Nm³/min | Argon flow rate of sidewall lance, Nm³/m in | Slag T.Fe at oxygen blowing stage, % | Molten steel temperature at oxygen blowing stage, % |
|---|---|---|---|---|---|---|---|---|
| 72A | Embodiment 7 | 118 | 18 | 10 | 38 | 3 | 18 | 1528 |
| | Embodiment 8 | 116 | 23 | 6 | 52 | 4 | 21 | 1539 |
| | Embodiment 9 | 115 | 20 | 8 | 30 | 5 | 15 | 1520 |
| 82A | Embodiment 10 | 120 | 30 | 7 | 45 | 5 | 25 | 1545 |
| | Embodim ent 11 | 119 | 27 | 6 | 60 | 4 | 16 | 1541 |
| | Embodim ent 12 | 110 | 19 | 9 | 55 | 3 | 19 | 1550 |
| 97A | Embodim ent 13 | 114 | 15 | 7 | 46 | 2 | 23 | 1537 |
| | Embodim ent 14 | 110 | 25 | 5 | 58 | 5 | 20 | 1542 |
| | Embodim ent 15 | 113 | 23 | 6 | 47 | 4 | 17 | 1530 |

**Table 4 Key Electric Furnace Smelting Endpoint Parameters for Cord Steel**

| Steel grade | Parameter | Basicity of slag | Slag T.Fe | Temperature, °C | Tapping C, % | Tapping O, % | Tapping P, % |
|---|---|---|---|---|---|---|---|
| 72A | Embodiment 7 | 5.8 | 9 | 1663 | 0.19 | 0.0277 | 0.0039 |
| | Embodiment 8 | 8.3 | 11 | 1657 | 0.37 | 0.0164 | 0.0041 |
| | Embodiment 9 | 6.5 | 8 | 1669 | 0.49 | 0.0115 | 0.0032 |
| 82A | Embodiment 10 | 5.0 | 10 | 1650 | 0.38 | 0.0197 | 0.0056 |
| | Embodiment 11 | 9.5 | 13 | 1671 | 0.20 | 0.0253 | 0.0057 |
| | Embodiment 12 | 7.3 | 11 | 1666 | 0.36 | 0.0128 | 0.0033 |
| 97A | Embodiment 13 | 10.6 | 14 | 1658 | 0.50 | 0.0089 | 0.0045 |
| | Embodiment 14 | 6.8 | 10 | 1665 | 0.10 | 0.0300 | 0.0060 |
| | Embodiment 15 | 7.0 | 12 | 1645 | 0.47 | 0.0112 | 0.0046 |

**Table 5 Key Electric Furnace Smelting Parameters for Cable Steel**

| Steel grade | Parameter | Charging amount , t | Hot heel, % % | Flow rate of bottom-blow ing argon at early stage of smelting, Nm³/min | Flow rate of bottom-blow ing oxygen, Nm³/min | Argon flow rate of sidewall lance, Nm³/m in | Slag T.Fe at oxygen blowing stage, % | Molten steel temperature at oxygen blowing stage, % |
|---|---|---|---|---|---|---|---|---|
| 87B | Embodiment 16 | 120 | 27 | 6 | 36 | 3 | 19 | 1535 |
| | Embodiment 17 | 118 | 25 | 10 | 50 | 2 | 21 | 1520 |
| | Embodim ent 18 | 110 | 20 | 8 | 60 | 4 | 23 | 1546 |
| 92S i | Embodim ent 19 | 115 | 15 | 9 | 55 | 5 | 18 | 1539 |
| | Embodim ent 20 | 117 | 23 | 7 | 56 | 5 | 25 | 1550 |
| | Embodim ent 21 | 119 | 26 | 5 | 30 | 3 | 15 | 1541 |

**Table 6 Key Electric Furnace Smelting Endpoint Parameters for Cable Steel**

| Steel grade | Parameter | Basicity of slag | Slag T.Fe | Temperature, °C | Tapping C, % | Tapping O, % | Tapping P, % |
|---|---|---|---|---|---|---|---|
| 87B | Embodiment 16 | 6.5 | 13 | 1658 | 0.10 | 0.0300 | 0.0043 |
| | Embodiment 17 | 7.3 | 8 | 1669 | 0.36 | 0.0157 | 0.0051 |
| | Embodiment 18 | 5.8 | 15 | 1650 | 0.32 | 0.0176 | 0.0037 |
| 92Si | Embodiment 19 | 5.0 | 10 | 1645 | 0.50 | 0.0098 | 0.0060 |
| | Embodiment 20 | 6.2 | 12 | 1667 | 0.45 | 0.0142 | 0.0055 |
| | Embodiment 21 | 8.6 | 9 | 1664 | 0.27 | 0.0209 | 0.0042 |

### Step 2: Electric furnace tapping

Slag is blocked by a slide plate during electric furnace tapping, at the beginning of tapping, a pre-deoxidation way is selected according to a C content in the molten steel, when the C content is less than or equal to 0.35%, 10-20% of low-nitrogen carburizer and 20-30% of metallic manganese are added into a ladle for pre-deoxidation, and bottom blowing is not activated during the tapping. After the tapping is finished, medium-to-large bottom-blowing stirring is activated. When the C content is more than 0.35%, rimmed tapping is carried out, and a small-to-medium bottom-blowing stirring is activated. After 90% of tapping is completed, silicon carbide, synthetic slag and lime are added for slag deoxidation and slag formation; and after tapping is finished, the molten steel is conveyed to RH treatment.

The low-nitrogen carburizer added during electric furnace tapping includes less than or equal to 0.0035% of N, more than or equal to 99% of C, and the rest of inevitable impurity elements. The metallic manganese includes more than or equal to 98.5% of Mn, less than or equal to 0.006% of P, less than or equal to 0.003% of S, less than or equal to 0.0035% of Ti, less than or equal to 0.005% of Al, and the rest of iron and inevitable impurity elements. The silicon carbide includes more than or equal to 0.98% of SiC, and other inevitable impurity elements. The synthetic slag added during electric furnace tapping includes main composition as follows: 55-65% of CaO, 10-20% of SiO₂, 3-8% of CaF₂, 1-3% of MnO, 1-5% of MgO, less than or equal to 3% of Al₂O₃, and other inevitable impurity composition. More than or equal to 90% of the synthetic slag has a particle size of less than or equal to 3 mm, more than or equal to 5% of the synthetic slag has the particle size of 3-5 mm, and remaining synthetic slag has the particle size of more than 5 mm; and moisture is less than or equal to 1.0%. A used ladle brick is a high-strength high-density magnesia-carbon brick with a flexure strength of more than or equal to 45 MPa, a density of 2.8-3.5 g/cm³ and a porosity of less than or equal to 9.0%, and includes more than or equal to 85% of MgO, 3-8% of C, less than or equal to 3.0% of Al₂O₃, and the rest of other inevitable composition.

**Table 7 Key Electric Furnace Tapping Parameters for Spring Steel**

| Steel grade | Parameter | Tapping C, % | Bottom blowing flow rate, NL/min | Addition amount of silicon carbide, kg/t | Addition amount of synthetic slag, kg/t | Addition amount of lime, kg/t | Basicity of slag |
|---|---|---|---|---|---|---|---|
| 55SiCr | Embodiment 1 | 0.15 | 800 | 1.2 | 10 | 1.5 | 2.3 |
| | Embodiment 2 | 0.35 | 400 | 1.6 | 12 | 2.7 | 2.8 |
| | Embodiment 3 | 0.28 | 350 | 1.8 | 11 | 3.5 | 3.2 |
| 65Mn | Embodiment 4 | 0.50 | 200 | 1.0 | 11 | 1.8 | 2.0 |
| | Embodiment 5 | 0.10 | 500 | 2.0 | 10 | 3.2 | 3.5 |
| | Embodiment 6 | 0.46 | 300 | 1.5 | 12 | 2.3 | 2.5 |

**Table 8 Key Electric Furnace Tapping Parameters for Cord Steel**

| Steel grade | Parameter | Tapping C, % | Bottom blowing flow rate, NL/min | Addition amount of silicon carbide, kg/t | Addition amount of synthetic slag, kg/t | Addition amount of lime, kg/t | Basicity of slag |
|---|---|---|---|---|---|---|---|
| 72A | Embodiment 7 | 0.19 | 600 | 1.3 | 11 | 1.7 | 3.3 |
| | Embodiment 8 | 0.37 | 200 | 1.0 | 10 | 2.5 | 2.5 |
| | Embodiment 9 | 0.49 | 300 | 1.8 | 12 | 1.9 | 2.0 |
| 82A | Embodiment 10 | 0.38 | 250 | 1.7 | 12 | 1.5 | 2.8 |
| | Embodiment 11 | 0.20 | 600 | 2.0 | 10 | 3.3 | 3.5 |
| | Embodiment 12 | 0.36 | 300 | 1.5 | 11 | 3.5 | 3.1 |
| 97A | Embodiment 13 | 0.50 | 200 | 1.9 | 11 | 1.8 | 2.7 |
| | Embodiment 14 | 0.10 | 800 | 1.4 | 12 | 2.3 | 2.3 |
| | Embodiment 15 | 0.47 | 250 | 1.2 | 10 | 2.8 | 3.2 |

**Table 9 Key Electric Furnace Tapping Parameters for Cable Steel**

| Steel grade | Parameter | Tapping C, % | Bottom blowing flow rate, NL/min | Addition amount of silicon carbide, kg/t | Addition amount of synthetic slag, kg/t | Addition amount of lime, kg/t | Basicity of slag |
|---|---|---|---|---|---|---|---|
| 87B | Embodiment 16 | 0.10 | 700 | 1.9 | 12 | 3.0 | 2.5 |
| | Embodiment 17 | 0.36 | 250 | 1.5 | 10 | 1.8 | 2.0 |
| | Embodiment 18 | 0.32 | 800 | 1.0 | 10 | 2.9 | 2.8 |
| 92Si | Embodiment 19 | 0.50 | 200 | 1.6 | 11 | 1.5 | 2.7 |
| | Embodiment 20 | 0.45 | 300 | 2.0 | 11 | 2.6 | 3.5 |
| | Embodiment 21 | 0.27 | 400 | 1.3 | 12 | 3.5 | 3.2 |

### Step 3: RH furnace refining

A rapid vacuumizing treatment is carried out upon RH arrival, followed by deoxidation and desulfurization treatments, then vacuum is broken to tap steel after a clean circulation treatment, and the tapped steel is conveyed to a continuous casting platform for a controlled holding time before starting casting.

The rapid vacuumizing treatment upon RH arrival is specifically as follows: turning on three water ring pumps and E4, E3, E2 and E1 steam pumps in turn, rapidly reducing a pressure in a vacuum chamber to extremely low, setting a high lift gas flow rate, and controlling deep vacuum treatment time. According to arrival composition, if the C content is more than or equal to 0.35%, natural carbon deoxidation is carried out under deep vacuum. If the C content is less than 0.35%, the low-nitrogen carburizer is added according to 0.45% of a target value for deoxidation, then the silicon carbide is added for continuous deoxidation, composition is sampled and tested, and one or more of the low-nitrogen carburizer, ultra-pure silicon, metallic manganese, ferrochrome and ferrovanadium is added according to a composition test result for alloying, thereby achieving target composition. A desulfurization treatment is specifically as follows: the deep vacuum treatment is continued for a certain time after the alloying is finished, then the three water ring pumps and the E4 steam pump are turned off, the ladle is descended, the pressure in the vacuum chamber is increased, and the lift gas flow rate is reduced, an addition amount of a desulfurizer is determined according to an S content in the molten steel, after completing the addition of the desulfurizer in batches, clean circulation is carried out, followed by vacuum breaking to tap the steel.

The low-nitrogen carburizer used by RH includes less than or equal to 0.0035% of N, more than or equal to 99% of C, and the rest of inevitable impurity elements. The metallic manganese includes more than or equal to 99% of Mn, less than or equal to 0.003% of Ti, less than or equal to 0.005% of Al, less than or equal to 0.0065% of P, less than or equal to 0.0035% of S, and the rest of iron and inevitable impurity elements. The silicon carbide includes more than or equal to 98% of SiC content and the rest of inevitable impurity elements. Ultra-pure silicone includes 80-85% of SiC, less than or equal to 0.0035% of Al, less than or equal to 0.001% of Ti, less than or equal to 0.005% of P, less than or equal to 0.0025% of S, and the rest of iron and inevitable impurity elements. Ferrochrome includes 55-60% of Cr, less than or equal to 1.8% of C, less than or equal to 0.006% of S, less than or equal to 0.013% of P, and the rest of iron and inevitable impurity elements. Ferrovanadium includes 45-50% of V, less than or equal to 1.6% of C, less than or equal to 0.005% of S, less than or equal to 0.012% of P, and the rest of iron and inevitable impurity elements. The desulfurizer includes composition as follows: 70-80% of CaO, 15-25% of CaF₂, 1-3% of MgO, less than or equal to 2% of SiO₂, and other inevitable impurity composition. More than or equal to 90% of desulfurizer has a particle size of 3-8 mm, and the maximum particle size of the desulfurizer does not exceed 10 mm. A refractory used for a dipping tube and a bottom tank of a RH vacuum furnace is a high-quality ultra-low-carbon magnesia-chrome brick with a flexural strength of more than or equal to 48 MPa, a density of 3.2-3.6 g/cm³ and a porosity of less than or equal to 8.0%. The magnesia-chrome brick includes less than or equal to 1.5% of C, 85-95% of MgO, 5-12% of Cr₂O₃, and other inevitable impurity composition.

**Table 10 RH Arrival and Deep Vacuum Treatment Parameters for Spring Steel**

| Steel grade | Parameter | Arrival Temperature , °C | Lowest vacuu m degree, mbar | Least vacuumizin g time, min | Lift gas, Nm³/mi n | Deep vacuu m time, min | Carbon deoxidatio n time, min |
|---|---|---|---|---|---|---|---|
| 55SiC r | Embodimen t 1 | 1595 | 0.5 | 5.0 | 200 | 22 | 5.5 |
| | Embodimen t 2 | 1598 | 0.3 | 4.5 | 250 | 21 | 6.0 |
| | Embodimen t 3 | 1606 | 0.8 | 4.0 | 210 | 20 | 8.0 |
| 65Mn | Embodimen t 4 | 1597 | 0.7 | 4.2 | 230 | 25 | 5.0 |
| | Embodimen t 5 | 1603 | 0.6 | 4.6 | 220 | 23 | 7.5 |
| | Embodimen t 6 | 1610 | 1.0 | 4.0 | 240 | 24 | 6.5 |

**Table 11 Post-RH Treatment Alloying and Tapping Parameters for Spring Steel**

| Steel grade | Parameter | Post-alloyin g deep vacuum time, min | Ladle descending , cm | Pressure in vacuum chamber , mbar | Lift gas, Nm³/mi n | Clean circulation , min | Holdin g time, min |
|---|---|---|---|---|---|---|---|
| 55SiC r | Embodimen t 1 | 6.0 | 15 | 30 | 110 | 6 | 8 |
| | Embodimen t 2 | 7.5 | 20 | 25 | 120 | 5 | 10 |
| | Embodimen t 3 | 5.5 | 20 | 45 | 100 | 7 | 8 |
| 65Mn | Embodimen t 4 | 5.0 | 25 | 20 | 105 | 8 | 9 |
| | Embodimen t 5 | 8.0 | 15 | 35 | 115 | 6 | 11 |
| | Embodimen t 6 | 6.0 | 20 | 40 | 110 | 6 | 9 |

**Table 12 RH Arrival and Deep Vacuum Treatment Parameters for Cord Steel**

| Steel grade | Parameter | Arrival Temperature, °C | Lowest vacuum degree, mbar | Least vacuumizing time, min | Lift gas, Nm³/min | Deep vacuum time, min | Carbon deoxidation time, min |
|---|---|---|---|---|---|---|---|
| 72A | Embodiment 7 | 1611 | 0.7 | 3.5 | 220 | 23 | 6.5 |
| | Embodiment 8 | 1595 | 0.3 | 4.0 | 210 | 22 | 5.0 |
| | Embodiment 9 | 1610 | 1.0 | 4.2 | 250 | 20 | 5.5 |
| 82A | Embodiment 10 | 1608 | 0.6 | 5.0 | 200 | 25 | 7.0 |
| | Embodiment 11 | 1606 | 0.5 | 4.6 | 210 | 26 | 6.5 |
| | Embodiment 12 | 1613 | 0.8 | 3.8 | 230 | 23 | 6.0 |
| 97A | Embodiment 13 | 1595 | 0.4 | 4.7 | 250 | 22 | 5.0 |
| | Embodiment 14 | 1598 | 0.7 | 4.0 | 240 | 21 | 5.5 |
| | Embodiment 15 | 1607 | 0.9 | 4.5 | 230 | 24 | 7.5 |

**Table 13 Post-RH Treatment Alloying and Tapping Parameters for Cord Steel**

| Steel grade | Parameter | Post-alloying deep vacuum time, min | Ladle descending, cm | Pressure in vacuum chamber, mbar | Lift gas, Nm³/min | Clean circulation, min | Holding time, min |
|---|---|---|---|---|---|---|---|
| 72A | Embodiment 7 | 5.5 | 20 | 35 | 110 | 5 | 9 |
| | Embodiment 8 | 5.0 | 15 | 20 | 105 | 7 | 8 |
| | Embodiment 9 | 6.0 | 25 | 25 | 100 | 6 | 8 |
| 82A | Embodiment 10 | 7.5 | 18 | 30 | 100 | 6 | 10 |
| | Embodiment 11 | 5.0 | 22 | 45 | 110 | 8 | 9 |
| | Embodiment 12 | 8.0 | 16 | 40 | 120 | 7 | 11 |
| 97A | Embodiment 13 | 5.5 | 17 | 35 | 120 | 6 | 9 |
| | Embodiment 14 | 6.0 | 23 | 30 | 115 | 7 | 11 |
| | Embodiment 15 | 6.5 | 20 | 20 | 100 | 6 | 12 |

**Table 14 RH Arrival and Deep Vacuum Treatment Parameters for Cable Steel**

| Steel grade | Parameter | Arrival Temperature, °C | Lowest vacuum degree, mbar | Least vacuumizing time, min | Lift gas, Nm³/min | Deep vacuum time, min | Carbon deoxidation time, min |
|---|---|---|---|---|---|---|---|
| 87B | Embodiment 16 | 1598 | 0.6 | 4.0 | 250 | 23 | 5.0 |
| | Embodiment 17 | 1600 | 0.8 | 5.0 | 230 | 20 | 7.0 |
| | Embodiment 18 | 1603 | 0.3 | 4.5 | 220 | 25 | 6.5 |
| 92Si | Embodiment 19 | 1590 | 0.5 | 4.8 | 200 | 22 | 6.0 |
| | Embodiment 20 | 1605 | 1.0 | 4.1 | 220 | 24 | 7.5 |
| | Embodiment 21 | 1612 | 0.5 | 3.6 | 210 | 22 | 8.0 |

**Table 15 Post-RH Treatment Alloying and Tapping Parameters for Cable Steel**

| Steel grade | Parameter | Post-alloying deep vacuum time, min | Ladle descending, cm | Pressure in vacuum chamber, mbar | Lift gas, Nm³/min | Clean circulation, min | Holding time, min |
|---|---|---|---|---|---|---|---|
| 87B | Embodiment 16 | 5.5 | 16 | 35 | 110 | 5 | 8 |
| | Embodiment 17 | 6.0 | 20 | 40 | 100 | 7 | 10 |
| | Embodiment 18 | 7.0 | 25 | 45 | 110 | 8 | 9 |
| 92Si | Embodiment 19 | 6.5 | 15 | 20 | 120 | 7 | 8 |
| | Embodiment 20 | 7.5 | 21 | 35 | 115 | 6 | 10 |
| | Embodiment 21 | 5.0 | 18 | 25 | 105 | 8 | 11 |

### Step 4: Bloom continuous casting

Step 4: A continuous casting machine is a straight-arc rectangular billet continuous casting machine, and a continuous casting billet has a section size of 300 mm × 390 mm and an arc radius of 12.5 m. Casting is protected in the whole process of continuous casting, a high-basicity and low-alumina tundish covering flux is adopted, a fluctuation of a molten steel superheat in a tundish and a tundish superheat are controlled by using electromagnetic induction heating equipment in the tundish, where the tundish is efficiently changed, and the tonnage of the tundish is controlled to be stable during normal casting and tundish exchange. An overall submerged nozzle is used for casting, an immersion depth of the submerged nozzle is controlled, and mold electromagnetic stirring current and frequency are adjusted. The higher the C content or alloy element content, the greater the mold taper properly increased within the range of 1.05-1.15%. The mold water flow rate and a nozzle at a secondary cooling zone are controlled. During continuous casting, constant-speed casting is carried, and the reduction amount is controlled to obtain a high-quality cast billet. The cast billet is hot-charged and hot-delivered, the billet has a surface temperature of more than or equal to 450°C, and a corner temperature of more than or equal to 400°C, thereby reducing energy consumption in the reheating furnace.

The continuous casting machine in the continuous casting procedure includes eleventh withdrawal and straightening machines which are arranged in turn in a casting direction. A first withdrawal and straightening machine to a fourth withdrawal and straightening machine are distributed in a straightening segment, a pressure of the first withdrawal and straightening machine is 30-40 bar, and each withdrawal and straightening machine thereafter gradually increases by 5-15 bar. A fifth withdrawal and straightening machine to an eleventh withdrawal and straightening machine are distributed in a horizontal segment, a pressure of the fifth withdrawal and straightening machine is 75-85 bar, and each withdrawal and straightening machine thereafter increases by 5-10 bar, and the pressure of each of the tenth and eleventh withdrawal and straightening machines is reduced by 10-20 bar relative to that of the ninth withdrawal and straightening machine.

The high-basicity and low-alumina tundish covering flux for continuous casting include: basicity (CaO/SiO₂) of 1.2-1.5, less than or equal to 2% of Al₂O₃, 3-8% of CaF₂, 3-6% of MgO, and other inevitable composition. 70-80% of a magnesia spray coating for an inner wall of the tundish has a particle size of less than or equal to 2 mm, more than 20% of the magnesia spray coating has the particle size of 2-3 mm, and less than or equal to 5% of the magnesia spray coating has the particle size of more than 3 mm. The magnesia spray coating includes more than or equal to 80% of MgO, 5-10% of CaO, 1-3% of SiO₂, and other inevitable composition. The mold powder has a melting point of 1000-1100°C and viscosity of 0.3-0.45 Pa•s, and includes mass composition as follows: 15-20% of C, 0.6-0.8% of CaO/SiO₂, 10-15% of Na₂O, less than or equal to 3% of Al₂O₃, less than or equal to 1% of MgO, 3-6% of CaF₂, and other inevitable impurity composition. A stopper and a nozzle each include a magnesium-carbon material, the stopper further includes 80-85% of MgO, 8-12% of C, less than or equal to 1.5% of Al₂O₃, 1-4% of SiC, 2-3% of SiO₂, and other inevitable impurity composition, and has a density of 2.4-2.7 g/cm³, a porosity of less than or equal to 14%, and a flexural strength of more than or equal to 40 MPa. An inner wall of the submerged nozzle has a thickness of 5-7 mm, a density of 2.5-2.8 g/cm³ and a porosity of less than or equal to 13%, and includes more than or equal to 90% of MgO and C, 3-5% of SiC, and other inevitable impurity composition.

**Table 16 Key Continuous Casting Tundish Parameters for Spring Steel**

| Steel grade | Parameter | Casting speed m/min, | Tonnage fluctuation of tundish, t | Decline of tonnage during tundish exchange, t | Tundish superheat, °C | Fluctuation of superheat, °C | Induction heating power, KW |
|---|---|---|---|---|---|---|---|
| 55SiCr | Embodiment 1 | 0.65 | 1.0 | 4.5 | 15 | 4 | 2800 |
| | Embodiment 2 | 0.60 | 0.5 | 3.6 | 20 | 5 | 3000 |
| | Embodiment 3 | 0.50 | 0.6 | 5.0 | 25 | 4 | 3200 |
| 65Mn | Embodiment 4 | 0.63 | 0.8 | 3.0 | 18 | 3 | 2900 |
| | Embodiment 5 | 0.58 | 0.7 | 2.8 | 35 | 5 | 3500 |
| | Embodiment 6 | 0.53 | 0.9 | 3.7 | 40 | 4 | 2500 |

**Table 17 Continuous Casting Mold and Reduction Control Parameters for Spring Steel**

| Steel grad e | Paramete r | Mold water flow rate, NL/ min | Electromag netic stirring current, A | Electromag netic stirring frequency, Hz | Fore-sec tion secondar y cooling water, NL/min | Rear-sec tion secondar y cooling water, NL/min | Reduct ion amount , mm | C segregat ion index of cast billet |
|---|---|---|---|---|---|---|---|---|
| 55Si Cr | Embodi ment 1 | 3000 | 600 | 6 | 600 | 600 | 15 | 0.98 |
| | Embodi ment 2 | 2900 | 700 | 7 | 750 | 450 | 22 | 1.04 |
| | Embodi ment 3 | 2700 | 800 | 8 | 800 | 400 | 28 | 1.01 |
| 65M n | Embodi ment 4 | 2950 | 900 | 6 | 650 | 550 | 19 | 0.96 |
| | Embodi ment 5 | 2825 | 500 | 8 | 700 | 500 | 20 | 1.02 |
| | Embodi ment 6 | 2750 | 750 | 7 | 750 | 550 | 23 | 1.03 |

**Table 18 Key Continuous Casting Tundish Parameters for Cord Steel**

| Steel grade | Parameter | Casting speed m/min, | Tonnage fluctuation of tundish, t | Decline of tonnage during tundish exchange, t | Tundish superheat, °C | Fluctuation of superheat, °C | Induction heating power, KW |
|---|---|---|---|---|---|---|---|
| 72A | Embodiment 7 | 0.55 | 0.5 | 2.5 | 40 | 4 | 2500 |
| | Embodiment 8 | 0.50 | 0.8 | 3.6 | 25 | 3 | 2700 |
| | Embodiment 9 | 0.65 | 1.0 | 4.5 | 30 | 4 | 2600 |
| 82A | Embodiment 10 | 0.60 | 0.6 | 4.0 | 35 | 5 | 3000 |
| | Embodiment 11 | 0.65 | 0.7 | 5.0 | 30 | 3 | 3300 |
| | Embodiment 12 | 0.55 | 0.9 | 3.9 | 28 | 5 | 2900 |
| 97A | Embodiment 13 | 0.50 | 0.6 | 4.2 | 40 | 4 | 3500 |
| | Embodiment 14 | 0.60 | 0.8 | 3.3 | 30 | 5 | 3200 |
| | Embodiment 15 | 0.55 | 0.5 | 3.0 | 25 | 4 | 3000 |

**Table 19 Continuous Casting Mold and Reduction Control Parameters for Cord Steel**

| Ste el gra de | Paramete r | Mold water flow rate, NL/ min | Electromag netic stirring current, A | Electromag netic stirring frequency, Hz | Fore-sect ion secondar y cooling water, NL/min | Rear-sect ion secondar y cooling water, NL/min | Reduct ion amount , mm | C segregat ion index of cast billet |
|---|---|---|---|---|---|---|---|---|
| 72 A | Embodi ment 7 | 2750 | 550 | 6 | 650 | 500 | 18 | 0.96 |
| | Embodi ment 8 | 2700 | 680 | 8 | 700 | 450 | 15 | 1.02 |
| | Embodi ment 9 | 3000 | 600 | 7 | 800 | 400 | 20 | 1.04 |
| 82 A | Embodi ment 10 | 2900 | 750 | 8 | 750 | 450 | 23 | 0.97 |
| | Embodi ment 11 | 2950 | 900 | 7 | 600 | 550 | 28 | 1.03 |
| | Embodi ment 12 | 2800 | 820 | 7 | 630 | 600 | 25 | 1.04 |
| 97 A | Embodi ment 13 | 2750 | 850 | 6 | 720 | 480 | 26 | 1.02 |
| | Embodi ment 14 | 2950 | 750 | 8 | 780 | 450 | 23 | 1.03 |
| | Embodi ment 15 | 2800 | 500 | 7 | 670 | 500 | 28 | 1.02 |

**Table 20 Key Continuous Casting Tundish Parameters for Cable Steel**

| Steel grade | Parameter | Casting speed m/min, | Tonnage fluctuation of tundish, t | Decline of tonnage during tundish exchange, t | Tundish superheat, °C | Fluctuation of superheat, °C | Induction heating power, KW |
|---|---|---|---|---|---|---|---|
| 87B | Embodiment 16 | 0.65 | 47 | 40 | 30 | 4 | 1600 |
| | Embodiment 17 | 0.60 | 48 | 44 | 35 | 5 | 1800 |
| | Embodiment 18 | 0.55 | 49 | 43 | 43 | 5 | 1650 |
| 92Si | Embodiment 19 | 0.50 | 48 | 44 | 45 | 4 | 1750 |
| | Embodiment 20 | 0.60 | 49 | 45 | 36 | 3 | 1700 |
| | Embodiment 21 | 0.55 | 48 | 42 | 40 | 5 | 1650 |

**Table 21 Continuous Casting Mold and Reduction Control Parameters for Cable Steel**

| Ste el gra de | Paramete r | Mold water flow rate, NL/ min | Electromag netic stirring current, A | Electromag netic stirring frequency, Hz | Fore-sect ion secondar y cooling water, NL/min | Rear-sect ion secondar y cooling water, NL/min | Reduct ion amount , mm | C segregat ion index of cast billet |
|---|---|---|---|---|---|---|---|---|
| 87 B | Embodi ment 16 | 3000 | 550 | 8 | 800 | 500 | 23 | 0.98 |
| | Embodi ment 17 | 2900 | 500 | 9 | 750 | 600 | 15 | 1.03 |
| | Embodi ment 18 | 2850 | 750 | 7 | 700 | 450 | 20 | 1.04 |
| 92S i | Embodi ment 19 | 2700 | 850 | 8 | 600 | 400 | 26 | 0.97 |
| | Embodi ment 20 | 2850 | 800 | 9 | 700 | *550* | 25 | 0.96 |
| | Embodi ment 21 | 2800 | 900 | 8 | 650 | 500 | 28 | 1.03 |

### Step 5: Cogging and grinding

Step 5: When bloom casting is adopted, the continuous casting billet is heated in a cogging reheating furnace and subjected to soaking and heat preservation. A heating rate at a preheating zone is 10-20 °C/min, a heating rate at a heating zone is 20-30 °C/min, and then soaking and heating preservation are carried out. A rolled billet of 140 mm × 140 mm is obtained after cogging and rolling, the rolled billet is subjected to magnetic powder inspection, then the surface is fully ground, and spot grinding is carried out on a position with obvious flaw detection defect on the surface.

**Table 22 Key Cogging and Grinding Process Parameters for Spring Steel**

| Steel grade | Parameter | Preheating zone, °C | Heating zone, °C | Soaking zone, °C | Initial rolling temperature, °C | In-furnace time, min | Grinding depth ≥mm |
|---|---|---|---|---|---|---|---|
| 55SiCr | Embodiment 1 | 750 | 950 | 1180 | 1160 | 290 | 1.5 |
| | Embodiment 2 | 700 | 1050 | 1150 | 1110 | 300 | 1.0 |
| | Embodiment 3 | 800 | 1150 | 1250 | 1220 | 320 | 1.3 |
| 65Mn | Embodiment 4 | 600 | 1000 | 1160 | 1100 | 280 | 0.8 |
| | Embodiment 5 | 650 | 850 | 1220 | 1190 | 290 | 0.5 |
| | Embodiment 6 | 750 | 950 | 1200 | 1170 | 300 | 1.0 |

**Table 23 Key Cogging and Grinding Process Parameters for Cord Steel**

| | | | | | | | |
|---|---|---|---|---|---|---|---|
| Steel grade | Parameter | Preheating zone, °C | Heating zone, °C | Soaking zone, °C | Initial rolling temperature, °C | In-furnace time, min | Average grinding depth, ≥mm |
| 72A | Embodiment 7 | 700 | 900 | 1180 | 1140 | 280 | 0.4 |
| | Embodiment 8 | 750 | 850 | 1150 | 1100 | 295 | 0.6 |
| | Embodiment 9 | 600 | 1050 | 1250 | 1220 | 290 | 0.5 |
| 82A | Embodiment 10 | 650 | 1100 | 1200 | 1150 | 300 | 0.7 |
| | Embodiment 11 | 800 | 1080 | 1210 | 1190 | 310 | 1.0 |
| | Embodiment 12 | 750 | 1050 | 1250 | 1210 | 300 | 0.8 |
| 97A | Embodiment 13 | 680 | 1000 | 1160 | 1120 | 320 | 1.6 |
| | Embodiment 14 | 800 | 1150 | 1220 | 1190 | 300 | 1.5 |
| | Embodiment 15 | 750 | 950 | 1190 | 1160 | 315 | 1.2 |

**Table 24 Key Cogging and Grinding Process Parameters for Cable Steel**

| Steel grade | Parameter | Preheating zone, °C | Heating zone, °C | Soaking zone, °C | Initial rolling temperature, °C | In-furnace time, min | Grinding depth ≥mm |
|---|---|---|---|---|---|---|---|
| 87B | Embodiment 16 | 650 | 850 | 1150 | 1100 | 280 | 0.5 |
| | Embodiment 17 | 600 | 1150 | 1250 | 1220 | 300 | 0.8 |
| | Embodiment 18 | 750 | 1080 | 1200 | 1160 | 290 | 0.9 |
| 92Si | Embodiment 19 | 800 | 1050 | 1230 | 1180 | 305 | 1.3 |
| | Embodiment 20 | 780 | 950 | 1150 | 1110 | 310 | 1.5 |
| | Embodiment 21 | 700 | 1120 | 1190 | 1150 | 320 | 1.4 |

### Step 6: High-speed wire-rod rolling

Step 6: A high-temperature-resistant coating is sprayed on the surface of the rolled billet after grinding, when Si content in the high-carbon steel is less than or equal to 0.6%, a coating thickness is 0.1-0.3 mm, when the Si content is 0.6-1.0%, the coating thickness is 0.3-0.5 mm, and when Si content is more than 1.0%, the coating thickness is 0.5-1.0 mm.

The rolled billet is sprayed with a coating for protection prior to charging into the reheating furnace, and more than 90% of coating particles are 100-120 meshes; and composition of the coating includes calcium silicate, calcium aluminate, magnesia-alumina spinel, zirconia, graphite carbon and a small amount of alkali metal oxide, inorganic binder, surfactant and other substances, which do no decompose within 1600°C.

The rolled billet enters the reheating furnace for heating, a natural gas is used for heating, and an air-fuel ratio is controlled at 9.5-10.1. At the preheating zone, the in-furnace time is 40-60 min; at the heating zone, the in-furnace time is 60-80 min; and at the soaking zone, the in-furnace time is 60-80 min, and then the rolling is carried out.

**Table 25 Key Rolling Process Parameters for Spring Steel**

| Steel grade | Parameter | Preheating zone, °C | Heating zone, °C | Soaking zone, °C | Initial rolling temperature , °C | Finishing rolling arrival temperature , °C | Finishing rolling outbound temperature , °C |
|---|---|---|---|---|---|---|---|
| 55SiCr | Embodiment 1 | 780 | 950 | 1150 | 1000 | 950 | 1050 |
| | Embodiment 2 | 800 | 1100 | 1200 | 1130 | 890 | 1030 |
| | Embodiment 3 | 850 | 1050 | 1250 | 1150 | 930 | 1060 |
| 65Mn | Embodimen t 4 | 750 | 1080 | 1100 | 1030 | 850 | 1010 |
| | Embodimen t 5 | 780 | 900 | 1120 | 1070 | 920 | 1030 |
| | Embodimen t 6 | 820 | 1000 | 1180 | 1120 | 900 | 1000 |

**Table 26 Key Rolling Process Parameters for Cord Steel**

| Steel grad e | Parameter | Preheatin g zone, °C | Heatin g zone, °C | Soakin g zone, °C | Initial rolling temperature , °C | Finishing rolling arrival temperature , °C | Finishing rolling outbound temperature , °C |
|---|---|---|---|---|---|---|---|
| 72A | Embodimen t 7 | 750 | 980 | 1100 | 1000 | 850 | 1010 |
| | Embodimen t 8 | 850 | 1000 | 1150 | 1060 | 950 | 1000 |
| | Embodimen t 9 | 800 | 900 | 1130 | 1050 | 930 | 1020 |
| 82A | Embodimen t 10 | 750 | 1100 | 1160 | 1065 | 900 | 1000 |
| | Embodimen t 11 | 800 | 950 | 1200 | 1105 | 910 | 1030 |
| | Embodimen t 12 | 830 | 1030 | 1220 | 1100 | 900 | 1010 |
| 97A | Embodimen t 13 | 850 | 1060 | 1230 | 1140 | 950 | 1050 |
| | Embodimen t 14 | 750 | 1090 | 1250 | 1150 | 940 | 1060 |
| | Embodimen t 15 | 810 | 1000 | 1180 | 1070 | 900 | 1020 |

**Table 27 Key Rolling Process Parameters for Cable Steel**

| Steel grad e | Parameter | Preheati ng zone, °C | Heatin g zone, °C | Soakin g zone, °C | Initial rolling temperature , °C | Finishing rolling arrival temperature , °C | Finishing rolling outbound temperature , °C |
|---|---|---|---|---|---|---|---|
| 87B | Embodimen t 16 | 850 | 1060 | 1150 | 1050 | 910 | 1050 |
| | Embodimen t 17 | 750 | 900 | 1100 | 1000 | 850 | 1010 |
| | Embodimen t 18 | 820 | 970 | 1150 | 1040 | 930 | 1040 |
| 92Si | Embodimen t 19 | 850 | 1050 | 1250 | 1150 | 970 | 1060 |
| | Embodimen t 20 | 800 | 1020 | 1200 | 1110 | 910 | 1030 |
| | Embodimen t 21 | 780 | 1100 | 1190 | 1080 | 890 | 1000 |

### Step 7: Stelmor air cooling

A rolled wire rod obtained in the high-speed wire-rod rolling process employs an air-cooling process controlled by a Stelmor air-cooling line, and the Stelmor cooling line employs segmented accurate fan airflow control.

A high-cleanliness high-carbon steel wire rod produced by the method includes less than or equal to 10 ppm of T.O, more than or equal to 97% of sorbite and pearlite, a C content segregation value of less than or equal to 1.04, has no defects such as a microcrack, a pit, a scab and a scratch on the surface, and has no completely decarburized layer on the surface. The wire rod can be used for producing 1600-2200 MPa high-strength spring steel, 1800-2200 MPa bridge cable steel, a cord steel wire with a drawing diameter of more than 0.05 mm or a high-strength diamond wire.

**Table 28 Key Air-Cooling Process Parameters for Spring Steel**

| Steel grade | Parameter | Wire laying temperature, °C | Fans 1-3#, % | Fans 4-7#, % | Fans 8-9#, % | Remaining fans, % |
|---|---|---|---|---|---|---|
| 55SiCr | Embodiment 1 | 850 | 100 | 80 | 45 | 15 |
| | Embodiment 2 | 880 | 100 | 70 | 50 | 10 |
| | Embodiment 3 | 860 | 100 | 70 | 45 | Turn off |
| 65Mn | Embodiment 4 | 900 | 100 | 60 | 40 | Turn off |
| | Embodiment 5 | 880 | 100 | 80 | 45 | 20 |
| | Embodiment 6 | 950 | 100 | 70 | 50 | 10 |

**Table 29 Key Air-Cooling Process Parameters for Cord Steel**

| Steel grade | Parameter | Wire laying temperature, °C | Fans 1-3#, % | Fans 4-7#, % | Fans 8-9#, % | Remaining fans, % |
|---|---|---|---|---|---|---|
| 72A | Embodiment 7 | 850 | 100 | 65 | 40 | Turn off |
| | Embodiment 8 | 880 | 100 | 70 | 50 | 10 |
| | Embodiment 9 | 900 | 100 | 60 | 45 | 15 |
| 82A | Embodiment 10 | 885 | 100 | 80 | 50 | Turn off |
| | Embodiment 11 | 920 | 100 | 75 | 50 | 20 |
| | Embodiment 12 | 930 | 100 | 70 | 45 | 15 |
| 97A | Embodiment 13 | 950 | 100 | 65 | 40 | 15 |
| | Embodiment 14 | 935 | 100 | 80 | 50 | Turn off |
| | Embodiment 15 | 900 | 100 | 75 | 45 | 10 |

**Table 30 Key Air-Cooling Process Parameters for Cable Steel**

| Steel grade | Parameter | Wire laying temperature, °C | Fans 1-3#, % | Fans 4-7#, % | Fans 8-9#, % | Remaining fans, % |
|---|---|---|---|---|---|---|
| 87B | Embodiment 16 | 850 | 100 | 80 | 45 | 18 |
| | Embodiment 17 | 900 | 100 | 70 | 50 | 20 |
| | Embodiment 18 | 880 | 100 | 60 | 40 | Turn off |
| 92Si | Embodiment 19 | 900 | 100 | 70 | 45 | 15 |
| | Embodiment 20 | 950 | 100 | 80 | 40 | Turn off |
| | Embodiment 21 | 910 | 100 | 65 | 50 | 10 |

**The present disclosure can implement the following.**
**(1)** The process flow is short, the carbon emission is low, a blast furnace is canceled, or less molten iron is used. In addition, an LF refining furnace is canceled, and a short-flow production process route of a high-quality high-carbon steel wire rod is developed.
(2) Through classification and selection of steel scrap, the problems of resulfurization and rephosphorization in the electric furnace are solved. The process integrating electric furnace bottom oxygen blowing, slag remaining and slag discharge can effectively control harmful elements such as Al and Ti, thereby providing a guarantee for controlling impurity elements and endogenous brittle inclusions.
(3) The electric furnace employs a mode of bottom oxygen blowing and sidewall argon blowing to control a nitrogen absorption problem during electric furnace smelting. Integrating electric furnace endpoint rimmed tapping followed by direct RH treatment can effectively solve the problem of massive gas absorption during deoxidation and alloying in conventional tapping processes. In addition, the conventional LF refining operation for the high-carbon steel wire rod is canceled, which further reduces the gas absorption. During the RH treatment, carbon deoxidation, high vacuum and strong argon blowing operations are used to further reduce the nitrogen content in molten steel, which solves the technical problem of low-nitrogen smelting in electric furnace process.
**(4)** In the aspect of cleanliness control, the electric furnace high-carbon rimmed tapping followed by direct RH process is adopted, RH deep vacuum carbon deoxidation can greatly reduce the number of inclusions in an alloying stage. In addition, ladle bottom blowing is not activated in a RH vacuum treatment stage, and a slag-metal reaction is particularly weak. A synthetic slag composed of monocalcium silicate and dicalcium silicate is selected, which further prevents calcium silicate inclusions from entering the molten steel, so that the inclusions in the molten steel can be accurately controlled to be high-SiO₂ inclusions, which have poor wettability with molten steel, and are very easy to remove under circular stirring of the molten steel, thereby greatly improving the cleanliness of the molten steel.
(5) In the aspect of foreign inclusion control, the control of auxiliary materials such as ladle, vacuum tank and continuous casting refractories can reduce the source of alumina inclusions, improve the quality of the refractories, and reduce the foreign large-sized brittle inclusions formed by erosion of the refractories. In addition, RH uses variable cycle strength to remove inclusions, and high vacuum and high gas flow rate are used to remove low-melting acid inclusions. In an early stage, a high-vacuum high lift gas flow rate is used to remove low-melting-point acidic inclusions, such inclusions have a certain erosion effect on the refractories. The refractories are made of low-carbon materials, so that deoxidation erosion can be reduced. In middle and late stage, weak cycle stirring is used to reduce the erosion on the refractories and promote the floating of large-sized silicate composite inclusions formed in the early stage. The floating of the inclusions is further promoted by integrating soft stirring and holding after vacuum breaking and electromagnetic stirring for continuous casting.
(6) In continuous casting, narrow-range superheat, matched control of alloy elements and superheat and constant casting speed are adopted to achieve accurate segment-based reduction control, which can reduce the segregation of various elements in the cast billet, that is, reducing the formation of precipitate inclusions. In addition, problems such as internal cracks caused by improper distribution of reduction are avoided.
(7) During cogging and rolling, high-temperature and long-time heating technology is adopted to promote the uniform diffusion of elements and eliminate the problems of element segregation and the like. In addition, integrated with the full grinding of billets the application technology of novel coating materials, the surface decarburization of the wire rod can be reduced. By optimizing the controlled cooling process, an excellent wire rod with high sorbite and pearlite structure can be obtained.

The technical means disclosed by the schemes of the present disclosure are not limited to the technical means disclosed by the foregoing technical means, and further include technical solutions consisting of any combination of the foregoing technical features.

Inspired by the foregoing ideal embodiments according to the present disclosure, those skilled in the art can make various changes and modifications through the foregoing descriptions without departing from the scope of the technical idea of the present disclosure. The technical scope of the present disclosure is not limited to the contents in the specification, but must be determined according to the scope of the claims.

## Claims

1. A low-carbon-emission production method for high-cleanliness high-carbon steel, wherein the high-cleanliness high-carbon steel, in addition to alloy elements, such as Si, Mn, Cr and V, and Fe element, further comprises the following chemical composition in percentage by mass: 0.5-1.0% of C, less than or equal to 0.006% of P, less than or equal to 0.0035% of S, less than or equal to 0.0010% of T.O, less than or equal to 0.0030% of N, less than or equal to 0.0002% of H, less than or equal to 0.0015% of Alt, less than or equal to 0.0008% of Ti, less than or equal to 0.02% of Ni, less than or equal to 0.015% of Cu, less than or equal to 0.005% of Mo, less than or equal to 0.010% of Sn, and less than or equal to 0.008% of As;
a production technical process of the low-carbon-emission production method comprises: electric furnace smelting, RH (Ruhrstahl-Heraeus) vacuum processing, bloom continuous casting, cogging and grinding, high-speed wire-rod rolling, Stelmor air cooling, and finished wire rod obtaining, specifically comprising the following steps:
Step 1: electric furnace smelting, putting steel scrap into an electric furnace for smelting until the steel scrap completely becomes molten steel, wherein a charging amount of the electric furnace is 115+/-5 t, hot heel is 15-30%, high-quality steel scrap is selected for smelting, and used electricity comes from hydropower or photovoltaic power generation;
Step 2: electric furnace tapping, blocking slag by a slide plate in the tapping process, selecting a pre-deoxidation way according to a C content in the molten steel at the beginning of tapping, when the C content is less than or equal to 0.35%, adding 10-20% of low-nitrogen carburizer and 20-30% of metallic manganese into a ladle for pre-deoxidation, no bottom blowing in the tapping process, and after the tapping is finished, controlling a bottom-blowing flow rate at 400-800 NL/min; when the C content is more than 0.35%, carrying out rimmed tapping, enabling a bottom-blowing flow rate to be 200-300 NL/min in the whole tapping process; after 90% of tapping is completed, adding silicon carbide, synthetic slag and lime for slag deoxidation and slag formation; and after tapping is finished, conveying the molten steel to RH treatment;
Step 3: RF furnace refining, enabling a RH arrival temperature to be more than or equal to 1595°C, carrying out a rapid vacuumizing treatment upon RH arrival, followed by deoxidation and desulfurization treatments, breaking vacuum to tap steel after a clean circulation treatment, conveying the tapped steel to a continuous casting platform for a holding time of more than 8 min before starting casting, wherein
the deoxidation treatment is specifically as follows: according to arrival composition, if the C content is more than or equal to 0.35%, carrying out natural carbon deoxidation for more than 5 min under deep vacuum; if the C content is less than 0.35%, adding the low-nitrogen carburizer according to 0.45% of a target value for deoxidation for more than 5 min, then adding the silicon carbide for continuous deoxidation, sampling and testing composition, and adding one or more of the low-nitrogen carburizer, ultra-pure silicon, metallic manganese, ferrochrome and ferrovanadium according to a composition test result for alloying, thereby achieving target composition;
the desulfurization treatment is specifically as follows: continuing a deep vacuum treatment for more than 5 min after the alloying is finished, then turning off three water ring pumps and an E4 steam pump, descending the ladle by 15-25 cm, increasing a pressure in a vacuum chamber to above 20 mbar, reducing a lift gas flow rate to 100-120 Nm³/min, determining an addition amount of a desulfurizer according to an S content in the molten steel, after completing the adding of the desulfurizer in batches, carrying out clean circulation for more than or equal to 5 min, and breaking vacuum to tap the steel;
Step 4: adopting square billet continuous casting, protecting casting in the whole process of continuous casting, employing a high-basicity and low-alumina tundish covering flux, and controlling a fluctuation of a molten steel superheat in a tundish to be less than or equal to 5°C by using electromagnetic induction heating equipment in the tundish, wherein a tundish superheat is 15-40°C; employing an overall submerged nozzle for casting, wherein an immersion depth of the submerged nozzle is 10-15 mm, a mold electromagnetic stirring current is 500-900 A, an electromagnetic stirring frequency is 6-8 Hz, and a mold taper is adjusted according to an alloy element content of 1.05-1.15%; controlling a continuous casting speed at 0.50-0.65 m/min, controlling a reduction of a cast billet at 15-28 mm to obtain a cast billet with a C segregation index of 0.96-1.04, and hot-charging and hot-delivering the cast billet, wherein a surface temperature of the billet is greater than or equal to 450°C, and a corner temperature is greater than or equal to 400°C;
Step 5: carrying out cogging and grinding to control surface quality;
Step 6: carrying out high-speed wire-rod rolling to improve surface decarburization; and
Step 7: carrying out Stelmor air cooling to control cooling intensity and improve structure and properties.

2. The low-carbon-emission production method for high-cleanliness high-carbon steel according to claim 1, wherein in step 1, the electric furnace is electrified for temperature increase, during an early smelting stage, lime is added and lightly calcined for slag formation, bottom-blowing stirring is activated, wherein a flow rate of a bottom-blowing argon gas is 5-10 Nm³/min; after the steel scrap is completely molten, the lime is added in batches, lightly calcined and pelletized for slag formation, and a bottom-blowing gas is switched to oxygen after the steel scrap is molten, wherein a flow rate of the bottom-blowing oxygen is 30-60 Nm³/min, oxygen blowing time is adjusted according to Al, Ti and Si contents in the steel scrap, and a sidewall lance is turned on in the whole process of smelting for argon gas blowing at a flow rate of 2-5 Nm³/min; in the process of bottom oxygen blowing, the lime is added, lightly calcined and pelletized for temperature regulation and dephosphorization, wherein a T.Fe content in the slag is 15-25%; through foamy slag caused by bottom oxygen blowing and enhanced stirring, process slag flow is promoted, and dephosphorization is enhanced; electric power input is controlled to control a temperature of the molten steel at 1520-1550°C, a P content in the molten steel is reduced below 0.005%, and then slag removal is carried out; after the slag removal is finished, the lime is added, lightly calcined and pelletized for slag formation; basicity of the slag is controlled at 5.0 and more, the T.Fe content is 8-15%, the bottom oxygen blowing is stopped, and is switched to argon blowing, at a flow rate of 5-10 Nm³/min; the electric furnace is electrified at high power for temperature increase, a proper amount of low-nitrogen carburizer is added to adjust the C content in the molten steel, the temperature of the molten steel is increased to above 1645°C, the C content is 0.10-0.50%, an oxygen content is less than or equal to 0.03%, and then tapping is carried out.

3. The low-carbon-emission production method for high-cleanliness high-carbon steel according to claim 1, wherein in step 2, during electric furnace tapping, 1.0-2.0 kg/t of silicon carbide, 10-12 kg/t of synthetic slag and 1.5-3.5 kg/t of lime are added.

4. The low-carbon-emission production method for high-cleanliness high-carbon steel according to claim 1, wherein in step 3, the rapid vacuumizing treatment upon RH arrival is specifically as follows: turning on the three water ring pumps and E4, E3, E2 and E1 steam pumps in turn, reducing an operating pressure in the vacuum chamber to below 1 mbar within 5 min, and enabling the lift gas flow rate to be 200-250 Nm³/min and deep vacuum treatment time to be more than or equal to 20 min.

5. The low-carbon-emission production method for high-cleanliness high-carbon steel according to claim 1, wherein the square billet continuous casting is employed in step 4, a continuous casting machine is a straight-arc rectangular billet continuous casting machine, and a continuous casting billet has a section size of 300 mm × 390 mm and an arc radius of 12.5 m;
tundish induction heating power is 2500-3500 KW, a tonnage fluctuation of the tundish during normal casting is less than or equal to 1 ton, the tonnage decreases by less than or equal to 5 tons during tundish exchange, a mold water flow rate is 2700-3000 NL/min, intensive cooling is adopted within 1.5 m of a secondary cooling zone, with a water flow rate of 600-800 NL/min; and soft cooling is adopted in subsequent zones, with a water flow rate of 400-600 NL/min.

6. The low-carbon-emission production method for high-cleanliness high-carbon steel according to claim 1, wherein in step 5: during cogging and grinding, when bloom casting is employed, the continuous casting billet is heated in a cogging reheating furnace and undergoes soaking and heat preservation, and a rolled billet of 140 mm × 140 mm is obtained after cogging and rolling; magnetic powder inspection is carried out on the rolled billet, then a surface of the rolled billet is completely ground, and spot grinding is carried out on a position with obvious flaw detection defect on the surface, wherein an average grinding depth is more than or equal to 0.5 mm.

7. The low-carbon-emission production method for high-cleanliness high-carbon steel according to claim 1, wherein in step 6, during high-speed wire-rod rolling, a high-temperature-resistant coating is sprayed on the surface of the rolled billet after grinding, when a Si content in the high-carbon steel is less than or equal to 0.6%, a coating thickness is 0.1-0.3 mm, when the Si content is 0.6-1.0%, the coating thickness is 0.3-0.5 mm, and when Si content is more than 1.0%, the coating thickness is 0.5-1.0 mm;
the rolled billet after spraying is heated in a steel-rolling reheating furnace and undergoes soaking and heat preservation, a natural gas is used for heating, and an air-fuel ratio is controlled at 9.5-10.1; an initial rolling temperature of the rolled billet after leaving the reheating furnace is 1000-1150°C, a finishing rolling arrival temperature is 850-970°C, and a finishing rolling outbound temperature is 1000-1060°C.

8. The low-carbon-emission production method for high-cleanliness high-carbon steel according to claim 1, wherein in step 7, during Stelmor air cooling, a rolled wire rod obtained in the high-speed wire-rod rolling process employs an air-cooling process controlled by a Stelmor air-cooling line, and a wire laying temperature of the Stelmor air-cooling line is controlled at 850-950°C.

9. The low-carbon-emission production method for high-cleanliness high-carbon steel according to claim 1, wherein the high-quality steel scrap used by the electric furnace comprises, but is not limited to, silicon steel, pipeline steel, bridge steel, an automobile sheet, spring steel, cord steel and cable steel, and comprises composition as follows: less than or equal to 0.035% of P, less than or equal to 0.008% of S, less than or equal to 0.015% of Ti, less than or equal to 0.025% of Ni, less than or equal to 0.018% of Cu, less than or equal to 0.006% of Mo, less than or equal to 0.015% of Sn, less than or equal to 0.01% of As, and other conventional C, Si, Al, Mn and Fe elements.

10. The low-carbon-emission production method for high-cleanliness high-carbon steel according to claim 1, wherein the low-nitrogen carburizer added during electric furnace tapping comprises less than or equal to 0.035% of N, more than or equal to 99% of C, and other inevitable impurity elements;
the metallic manganese comprises more than or equal to 98.5% of Mn, less than or equal to 0.006% of P, less than or equal to 0.003% of S, less than or equal to 0.0035% of Ti, less than or equal to 0.005% of Al, and other iron and inevitable impurity elements;
the silicon carbide comprises more than or equal to 98% of SiC content, and other inevitable impurity elements;
the synthetic slag added during electric furnace tapping comprises main composition as follows: 55-65% of CaO, 10-20% of SiO₂, 3-8% of CaF₂, 1-3% of MnO, 1-5% of MgO, less than or equal to 3% of Al₂O₃ , and other inevitable impurity composition; the synthetic slag and the lime are added for slag formation, and the basicity of slag is 2.0-3.5; more than or equal to 90% of synthetic slag has a particle size of less than or equal to 3 mm, more than or equal to 5% of the synthetic slag has the particle size of 3-5 mm, and remaining synthetic slag has the particle size of more than 5 mm; and moisture is less than or equal to 1.0%.

11. The low-carbon-emission production method for high-cleanliness high-carbon steel according to claim 1, wherein in percentage by mass, the low-nitrogen carburizer used by RH comprises less than or equal to 0.035% of N, more than or equal to 99% of C, and other inevitable impurity elements;
the metallic manganese comprises more than or equal to 99% of Mn, less than or equal to 0.003% of Ti, less than or equal to 0.005% of Al, less than or equal to 0.0065% of P, less than or equal to 0.0035% of S, and other iron and inevitable impurity elements;
the silicon carbide comprises more than or equal to 98% of SiC content, and other inevitable impurity elements;
the ultra-pure silicone comprises 80-85% of SiC, less than or equal to 0.0035% of Al, less than or equal to 0.001% of Ti, less than or equal to 0.005% of P, less than or equal to 0.0025% of S, and other iron and inevitable impurity elements;
the ferrochrome comprises 55-60% of Cr, less than or equal to 1.8% of C, less than or equal to 0.006% of S, less than or equal to 0.013% of P, and other iron and inevitable impurity elements;
the ferrovanadium comprises 45-50% of V, less than or equal to 1.6% of C, less than or equal to 0.005% of S, less than or equal to 0.012% of P, and other iron and inevitable impurity elements; and
the desulfurizer comprises composition as follows: 70-80% of CaO, 15-25% of CaF₂, 1-3% of MgO, less than or equal to 2% of SiO₂, and other inevitable impurity composition; and more than or equal to 90% of desulfurizer has a particle size of 3-8 mm, and a maximum particle size of the desulfurizer does not exceed 10 mm.

12. The low-carbon-emission production method for high-cleanliness high-carbon steel according to claim 1, wherein a used ladle brick is a high-strength and high-density magnesia-carbon brick with a flexural strength of more than or equal to 45 MPa, a density of 2.8-3.5 g/cm³ and a porosity of less than or equal to 9.0%; and in percentage by mass, the magnesia-carbon brick comprises more than or equal to 85% of MgO, 3-8% of C, less than or equal to 3.0% of Al₂O₃, and other inevitable composition.

13. The low-carbon-emission production method for high-cleanliness high-carbon steel according to claim 1, wherein a refractory used for a dipping tube and a bottom tank of a RH vacuum furnace is a high-quality ultra-low-carbon magnesite-chrome brick with a flexural strength of more than or equal to 48 MPa, a density of 3.2-3.6 g/cm³ and a porosity of less than or equal to 8.0%; and in percentage by mass, the magnesite-chrome brick comprises less than or equal to 1.5% of C, 85-95% of MgO, 5-12% of Cr₂O₃, and other inevitable composition.

14. The low-carbon-emission production method for high-cleanliness high-carbon steel according to claim 1, wherein the high-basicity and low-alumina tundish covering flux for continuous casting comprises follows: basicity (CaO/SiO₂) of 1.2-1.5, less than or equal to 2% of Al₂O₃, 3-8% of CaF₂, 3-6% of MgO, and other inevitable composition;
70-80% of a magnesia spray coating for an inner wall of the tundish has a particle size of less than or equal to 2 mm, more than 20% of the magnesia spray coating has the particle size of 2-3 mm, and less than or equal to 5% of the magnesia spray coating has the particle size of more than 3 mm; and the magnesia spray coating comprises more than or equal to 80% of MgO, 5-10% of CaO, 1-3% of SiO₂, and other inevitable composition; and
mold powder has a melting point of 1000-1100°C and viscosity of 0.3-0.45 Pa•s, and comprises mass composition as follows: 15-20% of C, 0.6-0.8% of CaO/SiO₂, 10-15% of Na₂O, less than or equal to 3% of Al₂O₃, less than or equal to 1% of MgO, 3-6% of CaF₂, and other inevitable impurity composition.

15. The low-carbon-emission production method for high-cleanliness high-carbon steel according to claim 1, wherein a stopper and the nozzle each comprise a magnesia carbon material, the stopper further comprises 80-85% of MgO of MgO, 8-12% of C, less than or equal to 1.5% of Al₂O₃, 1-4% of SiC, 2-3% of SiO₂, and other inevitable impurity composition, and has a density of 2.4-2.7 g/cm³, a porosity of less than or equal to 14%, and a flexural strength of more than or equal to 40 MPa;
an inner wall of the submerged nozzle has a thickness of 5-7 mm, a density of 2.5-2.8 g/cm³ and a porosity of less than or equal to 13%, and comprises more than or equal to 90% of MgO and C, 3-5% of SiC, and other inevitable impurity composition.

16. The low-carbon-emission production method for high-cleanliness high-carbon steel according to claim 1, wherein the continuous casting machine in the continuous casting process comprises eleventh withdrawal and straightening machines which are arranged in turn in a casting direction, wherein a first withdrawal and straightening machine to a fourth withdrawal and straightening machine are distributed in a straightening segment, a pressure of the first withdrawal and straightening machine is 30-40 bar, and each withdrawal and straightening machine thereafter gradually increases by 5-15 bar; a fifth withdrawal and straightening machine to an eleventh withdrawal and straightening machine are distributed in a horizontal segment, a pressure of the fifth withdrawal and straightening machine is 75-85 bar, and each withdrawal and straightening machine thereafter increases by 5-10 bar, and the pressure of each of the tenth and eleventh withdrawal and straightening machines is reduced by 10-20 bar relative to that of the ninth withdrawal and straightening machine.

17. The low-carbon-emission production method for high-cleanliness high-carbon steel according to claim 5, wherein during cogging and rolling, the billet is subjected to heat preservation after reaching a target temperature in a reheating furnace; at a preheating zone, a furnace temperature is controlled at 600-800°C, and a heating rate is 10-20°C/min; at a heating zone, a temperature is 850-1150°C, and a heating rate is 20-30°C/min; a soaking zone is at 1150-1250°C, and total in-furnace time is 280-320 min; then cogging and rolling are carried out at an initial rolling temperature of 1100-1220°C, and a cogging feedstock is a square rolled billet with a cross section of 140 mm×140 mm.

18. The low-carbon-emission production method for high-cleanliness high-carbon steel according to claim 17, wherein the rolled billet is sprayed with a coating for protection prior to charging into the reheating furnace, and more than 90% of coating particles are 100-120 meshes; and composition of the coating comprises calcium silicate, calcium aluminate, magnesia-alumina spinel, zirconia, graphite carbon and a small amount of alkali metal oxide, inorganic binder, surfactant and other substances, which do no decompose within 1600°C.

19. The low-carbon-emission production method for high-cleanliness high-carbon steel according to claim 17, wherein the rolled billet enters the reheating furnace for heating; at the preheating zone, the furnace temperature is controlled at 750-850°C, and time is 40-60 min; at the heating zone, the temperature is 900-1100°C, and time is 60-80 min; and the soaking zone is at 1100-1250°C, and time is 60-80 min.

20. The low-carbon-emission production method for high-cleanliness high-carbon steel according to claim 1, wherein in step 7, an air-cooling process controlled by Stelmor line is employed, on an air-cooling line, airflow of fans 1# to 3# is 100%, airflow of fans 4# to 7# is 60-80%, airflow of fans 8# and 9# is 40-50%, and airflow of other fans is turned on or off by 10-20%.

21. High-cleanliness high-carbon steel produced according to the method according to any one of claims 1 to 20.

22. A wire rod made from the high-cleanliness high-carbon steel according to claim 21.

23. The wire rod according to claim 22, wherein the wire rod has less than or equal to 10 ppm of T.O, more than or equal to 97% of sorbite and pearlite, a C content segregation value of less than or equal to 1.04, has no defects such as a microcrack, a pit, a scab and a scratch on the surface, and has no completely decarburized layer on the surface.

24. High-strength spring steel with a strength of 1600-2200 MPa, bridge cable steel with a strength of 1800-2200 MPa, a cord steel wire with a drawing diameter of more than 0.05 mm or a high-strength diamond wire made from the wire rod according to claim 23.

25. The high-cleanliness high-carbon steel according to claim 21, wherein when being spring steel 55SiCr, the high-cleanliness high-carbon steel further comprises the following chemical composition in percentage by mass: 0.50-0.60% of C, 1.35-1.65% of Si, 0.60-0.80% of Mn, 0.55-0.80% of Cr, and 0.15-0.35% of V;
when being spring steel 65Mn, the high-cleanliness high-carbon steel further comprises the following chemical composition in percentage by mass: 0.60-0.70% of C, 0.20-0.40% of Si, and 0.90-1.00% of Mn;
when being a cord wire 72A, the high-cleanliness high-carbon steel further comprises the following chemical composition in percentage by mass: 0.70-0.78% of C, 0.15-0.30% of Si, and 0.50-0.60% of Mn;
when being a cord wire 82A, the high-cleanliness high-carbon steel further comprises the following chemical composition in percentage by mass: 0.78-0.86% of C, 0.15-0.35% of Si, and 0.50-0.65% of Mn;
when being a cord wire 97A, the high-cleanliness high-carbon steel further comprises the following chemical composition in percentage by mass: 0.95-1.00% of C, 0.15-0.30% of Si, and 0.35-0.45% of Mn;
when being cable steel 87B, the high-cleanliness high-carbon steel further comprises the following chemical composition in percentage by mass: 0.85-0.90% of C, 0.45-0.60% of Si, 0.70-0.85% of Mn, 0.20-0.35% of Cr, and 0.02-0.05% of V; and
when being cable steel 92Si, the high-cleanliness high-carbon steel further comprises the following chemical composition in percentage by mass: 0.90-0.95% of C, 1.1-1.3% of Si, 0.75-0.90% of Mn, 0.20-0.35% of Cr, and 0.01- 0.04% of V.

26. The high-cleanliness high-carbon steel according to claim 25, wherein inclusions in the high-cleanliness high-carbon steel wire rod are mainly SiO₂-MnO low-melting-point inclusions, a number density of inclusions above 1 µm is less than or equal to 5 per mm², a number density of inclusions above 5 µm is less than or equal to 0.12 per mm², a maximum size of a transverse inclusion is less than or equal to 15 µm, grades of longitudinal inclusions A, B, C, D and Ds are all less than or equal to level 1, and a size of a brittle inclusion is less than or equal to 5 µm.

27. The high-cleanliness high-carbon steel according to claim 25, wherein a high-cleanliness high-carbon steel cast billet has a C segregation index of 0.96-1.04, and has no crack defect; in a metallographic structure of the wire rod, in percentage by volume, sorbite and pearlite are more than or equal to 97%, and a grain size is 8-10 grade; compared with other matrix areas, a most seriously segregated area on a cross section of the wire rod, in percentage by mass, has a carbon content ratio of less than or equal to 1.04, a Si content ratio of less than or equal to 1.15, a Mn content ratio of less than or equal to 1.12, a Cr content ratio of less than or equal to 1.10, a V content ratio of less than or equal to 1.15, and a hardness difference of less than or equal to 25 HV.

28. A low-carbon-emission production method for high-cleanliness high-carbon steel, wherein total C emission from steelmaking, continuous casting and rolling is less than 180 kg/ ton steel.
